(19) Europäisches Patentamt
European Patent Office
Office européen des brevets

(11) **EP 2 552 802 B1**

(12) **EUROPEAN PATENT SPECIFICATION**

(45) Date of publication and mention
of the grant of the patent:
**16.11.2016 Bulletin 2016/46**

(51) Int Cl.:
***B65D 77/20*** *(2006.01)*

(21) Application number: **11714669.6**

(22) Date of filing: **29.03.2011**

(86) International application number:
**PCT/US2011/030255**

(87) International publication number:
**WO 2011/123410 (06.10.2011 Gazette 2011/40)**

(54) **RESEALABLE LAMINATE FOR HEAT SEALED PACKAGING**

WIEDERVERSCHLIESSBARES LAMINAT FÜR HEISSIEGELVERPACKUNG

STRATIFIÉ POUVANT ÊTRE HERMÉTIQUEMENT REFERMÉ, POUR EMBALLAGE SOUDÉ À CHAUD

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2010 PCT/US2010/029352**

(43) Date of publication of application:
**06.02.2013 Bulletin 2013/06**

(73) Proprietor: **Avery Dennison Corporation Pasadena, CA 91103 (US)**

(72) Inventors:
• **DUAN, Xinrong Shanghai 201102 (CN)**
• **XUE, ZhiJian Shanghai 200124 (CN)**
• **DAFFNER, Martin Long Beach, CA 90802 (US)**

(74) Representative: **Müller-Boré & Partner Patentanwälte PartG mbB Friedenheimer Brücke 21 80639 München (DE)**

(56) References cited:
| | |
|---|---|
| **EP-A1- 1 016 598** | **EP-A1- 1 582 341** |
| **EP-A2- 1 358 068** | **EP-A2- 1 775 122** |
| **WO-A1-2004/074130** | **WO-A2-2005/014406** |
| **DE-A1-102006 002 965** | **US-A- 6 056 141** |
| **US-A1- 2005 074 549** | |

Remarks:
The file contains technical information submitted after the application was filed and not included in this specification

EP 2 552 802 B1

**Description**

The present invention relates to heat sealable packages that are also resealable.

A wide array of resealable containers are known. Typically, a container such as in the form of a flexible bag or rigid walled housing, is provided with an opening that serves to provide access to the interior of the container. A lid or cover is positioned over the opening and bonded to the container, typically by heat sealing, to enclose and seal the container interior and its contents from the external environment. For bag type containers, a portion of the flexible wall of the bag may serve as the cover and be folded or otherwise positioned over an opening in the bag. A reseal feature enables the lid or cover, or a portion thereof, to be removed or otherwise repositioned so as to allow access to the interior of the container. After accessing the interior of the container, the lid or cover can be appropriately positioned over the opening and engaged with the container to thereby reseal the container.

Numerous strategies have been devised for the lid or cover to overlay a container opening and engage the container to thereby seal the interior of the container from the outside environment. An example of a sealing strategy is the provision of corresponding, e.g. male and female, engagement structures on the respective contacting surfaces of the container and lid. Another example is the use of a layer of a pressure sensitive adhesive on the contacting surfaces of the lid or cover, and/or the corresponding region of the container extending about the periphery of the opening. This latter strategy is widely used, particularly for disposable packaging as used for storing and preserving perishable items such as food in which it is desirable to minimize exposure to air. For example, US Patent 3,329,331 describes a box having a top or wall section resealable by use of a layer of pressure sensitive adhesive.

As packaging technology developed, polymeric materials have been increasingly used in various multi-layer laminates for both containers and covers. It is well known to utilize certain polymeric materials in a laminate container and cover assembly, and to thermally bond such materials together in order to initially seal the resulting package. An example of this approach is described in US Patent 5,062,569 for a heat sealable container and lid assembly.

If however, a resealable function is desired, it is generally not possible to effectively and reliably perform the resealing using the same polymeric materials as used for the initial thermal sealing of the container. As a result, artisans devised multi-layer laminate assemblies containing both heat sealing materials and pressure sensitive adhesives. An example of such an assembly is described in US Patent 3,454,210. In that patent, multilayer laminates are used in both a cover and a base assembly. A heat sealable layer between the cover and base thermally bonds the components together in an initial sealing operation. Upon removal of the cover, a layer of the cover then ruptures, thereby exposing the pressure sensitive adhesive. The lid can be resealed to the container by contacting the pressure sensitive adhesive to a corresponding face on the container. A similar strategy is also described in US Patent 7,422,782.

Although satisfactory in many respects, package assemblies such as that disclosed in the '210 patent have several limitations. One such limitation stems from the provision of the heat sealing material and the pressure sensitive adhesive being positioned generally within the same layer or stratum of the cover laminate. This requires careful application of heat to only those regions at which the heat sealing material exists, use of heat-resistant pressure sensitive adhesives, and careful manufacturing of the lid laminate, for example. All of these concerns increase manufacturing and sealing complexity and costs. Furthermore, potential exposure to the pressure sensitive adhesive by the contents of the container, would likely be undesirable for food packaging applications.

As a result of these and other practices in the industry, resealable lid or cover laminates utilizing an underside with a heat sealing layer, and a pressure sensitive adhesive layer disposed at a different position in the laminate have been devised. Examples of these types of resealable packaging assemblies are disclosed in US Patent 6,302,290; US Publication 2004/0180118; and GB 2,319,746. The '290 patent and the '118 publication are directed to resealable container assemblies with multilayer covering sheets or films that are initially heat sealed to a container, and then upon opening of the container by removal of a portion of the sheet, a bead remains thermally bonded to an upwardly facing surface of the container. The bead assists in subsequent sealing by contacting an exposed region of a pressure sensitive adhesive carried by the sheet. The bead and/or its formation is achieved by use of a shifted strata arrangement of layers in the multilayer sheet. Although satisfactory in numerous regards, these container assemblies would likely not be suitable for sensitive and perishable food items that are frequently initially vacuum sealed and/or which must exhibit low oxygen permeability properties.

As far as is known, the previously noted GB '746 patent is the earliest disclosure of a resealable lid and container assembly in which the lid and container utilize opposing heat sealing layers for initial thermal sealing of the container, the lid utilizes a multi-layer assembly with an adhesive layer that is ruptured upon opening of the sealed container, and which lid also includes a barrier layer such as formed from polyvinylidene chloride (PVDC), thereby rendering the container potentially eligible for packaging perishable and/or sensitive food items.

However, it is believed that a variety of additional limitations are associated with each of the container systems described in the previously noted '290 patent, '118 publication, and the GB '746 patent. For example, the shifted strata arrangement of layers in the covering sheets and films described in the '290 patent and the '118 publication would be tedious and costly to produce, particularly in a high volume manufacturing context. The GB '746 patent fails to disclose a practical embodiment beyond its conceptual disclosure.

As a result of these and other concerns in the industry, efforts continued in an attempt to devise a practical and commercially feasible resealable container that was particularly adapted for packaging of sensitive and/or perishable items. US Patent 6,056,141 describes a reclosable packing system that remedies many of the previously noted shortcomings of other resealable container and lid assemblies. The '141 patent is directed to flexible multilayer lid sheets that are initially thermally bonded to a corresponding tray or container, can be opened by removing a portion of the multilayer lid sheet to thereby expose a region of pressure sensitive adhesive carried in the sheet, and which also utilize a barrier film in the multilayer lid sheet to improve sealing characteristics of the container.

Although providing an advance in the art, the reclosable packing system of the '141 patent is relatively complex, providing up to ten (10) layers in the lid sheet assembly and up to five (5) layers in the corresponding tray assembly. It is likely that such complex assemblies would be difficult and costly to manufacture. Furthermore, the use of such a large number of layers in a multilayer lid sheet, increases the susceptibility of malfunction of the lid sheet upon initial opening by a consumer. Tearing or rupturing of the lid sheet at any location other than the intended location along the layer of the pressure sensitive adhesive, would render the lid useless and thereby destroy the reclosing function of the assembly. Accordingly, a need remains in the packaging and container arts for a resealable assembly having excellent barrier properties, and a relatively simple construction for ease in manufacturing and reliability.

In packaging food items, a disadvantage typically associated with securely sealed containers, and most notably those with high barrier characteristics, is the difficulty in initially opening the container. Even with purportedly resealable containers such as used in packaging lunchmeat and other sensitive items, it is often very difficult to open the container. If a consumer is unable to readily open or "peel" the lid or sheet away from the container, resort to scissors or other utensils is made, again, resulting in destruction of the resealing feature. Accordingly, a need remains in the art for a resealable container assembly with high barrier properties, and which is relatively simple in construction and manufacture, and which can be easily opened by a consumer.

EP 1 016 598 A1 discloses a resealable package for a product, comprising a flexible container including a pair of opposite flexible side walls having opposing inner surfaces, the side walls having edge portions positionable in overlying relation, the edge portions being separable from each other to create an opening in the container, and an openable and resealable seal along the opening, the seal being defined by the edge portions of the side walls placed in confronting relation with each other and adhesively sealed together, a layer of pressure-sensitive adhesive being applied to the inner surface of at least one of the edge portions, and a layer of cohesive being applied to the inner surfaces of both edge portions and covering the pressure-sensitive adhesive, the cohesive layers of the edge portions being sealed together to form the seal, the pressure-sensitive adhesive having a greater affinity for adhering to the cohesive than to the inner surface of the package, whereby initial opening of the seal causes regions of the cohesive layers on the two side walls to remain adhered together such that regions of pressure-sensitive adhesive are detached from one side wall and remain with the other side wall and whereby the top seal may be resealed by pressing the edge portions of the two side walls together to cause the detached regions of pressure-sensitive adhesive to be reattached to the one side wall.

The difficulties and drawbacks associated with previous systems and methods are overcome by the present invention for a resealable package assembly.

In one aspect, the present invention provides a resealable package assembly according to claim 1.

In another aspect, the present invention provides a method for opening and resealing a previously thermally sealed package according to claim 16. Further embodiments of the present invention are set out in the dependent claims.

As will be realized, the invention is capable of other and different embodiments and its several details are capable of modifications in various respects, all without departing from the invention. Accordingly, the drawings and description are to be regarded as illustrative and not restrictive.

Figure 1 is a schematic partial view of a preferred cover laminate used in a preferred embodiment package assembly in accordance with the present invention.

Figure 2 is a schematic partial view of a preferred container used in the preferred embodiment package assembly of the present invention.

Figure 3 is a schematic view of the preferred cover laminate illustrating partial separation of two portions of the cover.

Figure 4 is a perspective view of the preferred embodiment package assembly of the present invention.

Figure 5 is a partial cross sectional view of the package assembly taken along line 5-5 in Figure 4.

Figure 6 is a partial cross sectional view of the package assembly taken along line 6-6 in Figure 4.

Figure 7 is a partial cross sectional view of the package assembly taken along line 7-7 in Figure 4.

Figure 8 is a schematic partial view of another preferred cover laminate used in a preferred embodiment package assembly in accordance with the present invention.

Figure 9 is a graph illustrating results of peel strength tests for a preferred pressure sensitive adhesive and several contacting substrates.

Figure 10 is a graph illustrating results of loop tack tests for the preferred pressure sensitive adhesive and several contacting substrates.

Figure 11 is a cross sectional view of a preferred embodiment laminate or laminate portion in accordance with the present invention.

The present invention provides a resealable package assembly having high barrier properties, which is relatively simple in construction and manufacture, and which can be readily initially opened and securely resealed. The package assembly comprises a cover assembly and a container which can be securely bonded to one another, such as by thermal bonding to thereby initially seal the interior of the container and its contents. The cover is a multilayer laminate which after being bonded or otherwise sealed to the container, can be readily opened by at least partially separating the cover into two portions along a designated interface within the laminate to reveal a region of adhesive in a first cover portion. The other cover portion remains bonded to the container and includes a region of an inner substrate or of a release layer, if present, exposed as a result of the cover separation. The two cover portions can then be remarried and contacted with one another to thereby effectively reseal the container. The configuration of the exposed region of the adhesive corresponds to, and preferably matches, the configuration of the exposed region of the inner substrate or release layer.

The present invention includes the incorporation of a release layer within the multilayer laminate of the cover immediately adjacent to the pressure sensitive adhesive layer. As explained in greater detail herein, the use of a release layer in the cover laminate significantly reduces the amount of force otherwise required to initially open a sealed container when certain adhesives or films are used. This feature promotes ease of use of a package system. The incorporation of a release layer as described herein also provides a designated rupture or separation interface between portions of the cover during initial opening of a sealed container. The provision of such a separation interface reduces the occurrence of tearing or unintended severing of the cover, thereby preserving the sealing integrity of the cover. These and other advantages of the preferred embodiment cover laminates and package assemblies are described in greater detail herein.

For ease in understanding the preferred embodiment package assembly, each of the various components in a representative cover and container of the assembly are described as follows.

Cover

The term "cover" as used herein refers to any multilayer laminate that is used to overlay one or more openings or apertures defined in a corresponding container, and which can be effectively secured to the container to thereby enclose and seal the interior of the container. The cover laminate comprises (without regard to any order of the layers) an outer substrate, a barrier material layer, an adhesive layer, a release layer (which may be pressure sensitive), an inner substrate, and a heat sealing layer. An optional printing layer may also be used. Each of these layers within the multilayer cover laminate is described as follows.

Cover Outer Substrate

The multilayer cover laminate includes an outer substrate to provide support for the cover and particularly for an outermost portion of the cover resulting from initial opening of the container and thus at least partial separation of the cover. The outer substrate can be formed from a wide array of materials such as polyethylene terephthalate film, polyolefin film materials or paper, cardboard, or other paper-based materials. Representative materials for the outer substrate include, but are not limited to, polyethylene terephthalate (PET), polyethylene (PE), polypropylene (PP), both oriented and nonoriented, and copolymers thereof. Another example of a potentially suitable film for the cover outer substrate is a layer of polyvinyl chloride (PVC) and copolymers thereof. Additional materials include, but are not limited to, polyvinyl chloride (PVC), and ortho-phthalaldehyde (OPA). For many applications, PET is preferred.

The cover outer substrate can be utilized at various thicknesses in the cover laminate. The outer substrate can have a typical thickness of from about 12 to about 60 microns, and a preferred thickness of from about 12 to about 25 microns.

Since the outer face of the outer substrate will likely constitute the outermost surface of the cover, it is desirable that the material selected for the outer substrate, at least along this outwardly directed face, exhibit attractive printability characteristics.

Printability is typically defined by the sharpness and brightness of the image and by ink anchorage. The sharpness is closely related to the surface tension of the print surface. The ink anchorage is often tested by a tape test (Finat test: FTM21). In general, PVC is printable with a variety of inks intended to be used with PVC. In most occasions the inks are water-based (especially in the US) or designed for UV drying (especially in Europe). In general, all polyolefin films can be printed with UV inks after on-press corona treatment, PE being better than PP mainly on ink adhesion. For waterbased inks an additional primer or topcoat is preferred to achieve good ink anchorage.

As explained herein, the cover laminate may include an optional printing layer disposed on an outer face of the cover or below the outer substrate on an inner surface of the outer substrate.

## Cover Barrier Material Layer

The multilayer cover laminate includes a barrier material layer to promote the sealing characteristics of the cover and resulting sealed cover and container assembly. Typically, it is desirable for the barrier material to exhibit resistance to oxygen transport or diffusion through the material. This is particularly desirable for sealing applications involving certain foods. A wide range of barrier materials can be used for the barrier material layer. The selection of the barrier material(s) is largely dictated by the degree of sealing required and hence, by the contents for which the sealing assembly is to house. Representative materials for use in the barrier material layer include, but are not limited to, polyvinyl alcohol (PVOH) and ethylene vinyl alcohol (EVOH) polymers. A well known and preferred barrier material is polyvinylidene chloride (PVDC). It is also contemplated that nylon and various nylon-based polymers known in the art could be used. It is further contemplated that combinations of these materials could be used, and in particular, multiple films of these materials could be utilized. An excellent discussion of barrier materials and their characteristics is provided in US Patent Application Publication 2004/0033379, owned by the assignee of the present application. Preferred materials for the barrier material include PVDC, PVOH, EVOH, and combinations thereof.

The barrier material is typically utilized at relatively small thicknesses in the preferred cover laminate. For example, the barrier material layer thickness is preferably from about 1 to about 5 microns, and preferably from about 1 to about 3 microns in thickness.

The barrier material exhibits relatively low oxygen permeability of less than 50 $cc/m^2/24$ hours. More preferably, the oxygen permeability is 0.5 to 7 $cc/m^2/24$ hours.

## Cover Adhesive Layer

The preferred multilayer cover laminate includes an adhesive layer. In one embodiment, the adhesive layer is a pressure sensitive adhesive layer and the adhesive provides a tacky surface allowing a bond to another contacting surface. Preferably, the properties of the adhesive are such that the bond also provides a seal to prevent or at least significantly prevent the flow of air or other agents across the region of the adhesive. The adhesive layer may be a single adhesive layer or may be a multilayer adhesive.

A wide range of adhesives can be used in this layer so long as their properties and characteristics are consistent with the packaging requirements of the resulting assembly. The adhesive could be a hot melt pressure sensitive adhesive, such as for example a rubber-based or acrylic-based pressure sensitive adhesive. The adhesive could be a UV cured hot melt. The adhesive could be based on a rubber-based hot melt composition, a solvent rubber adhesive, a solvent acrylic adhesive, or a solvent polyurethane adhesive. The adhesive could be emulsion-based such as an emulsion acrylic adhesive. As noted, a wide array of adhesives could be used. Each of the aforementioned adhesives are preferably in the form of PSA's. An extensive selection of various pressure sensitive adhesives are disclosed in US Patents 5,623,011; 5,830,571; and 6,147,165; owned by the assignee of the present application, and incorporated herein by reference.

A preferred pressure sensitive adhesive for use in the pressure sensitive adhesive layer is commercially available under the designation Fasson® S692N. The S692N adhesive is an acrylic emulsion based adhesive. Generally, this adhesive is a polymeric blend of butyl acrylate and 2-ethylhexyl acrylate monomers with various tackifiers and processing acids. Other preferred pressure sensitive adhesives include, but are not limited to, emulsion acrylic adhesives and rubber-based hot melt adhesives.

The thickness of the pressure sensitive adhesive layer typically ranges from about 3 to about 40 microns and preferably from about 12 to about 20 microns. It will be understood however that the present invention includes cover laminates using thicknesses greater than or lesser than these thicknesses for the pressure sensitive adhesive layer.

## Cover Release Layer

In accordance with the invention, the multilayer cover laminate includes a release layer. The release layer is disposed immediately adjacent to the pressure sensitive adhesive layer in the cover laminate and between the pressure sensitive adhesive layer and the inner substrate. The release layer provides a release surface which, as previously noted, is immediately adjacent to, and in contact with, the pressure sensitive adhesive layer.

A wide variety of release materials such as those typically used for pressure sensitive tapes and labels are known, including silicones, alkyds, stearyl derivatives of vinyl polymers (such as polyvinyl stearyl carbamate), stearate chromic chloride, stearamides and the like. Fluorocarbon polymer coated release liners are also known but are relatively expensive. For most pressure sensitive adhesive applications, silicones are by far the most frequently used materials. Silicone release coatings have easy release at both high and low peel rates, making them suitable for a variety of production methods and applications.

Known silicone release coating systems consist of a reactive silicone polymer, e.g., an organopolysiloxane (often referred to as a "polysiloxane," or simply, "siloxane"); a cross-linker; and a catalyst. After being applied to the adjacent layer or other substrate, the coating generally must be cured to cross-link the silicone polymer chains, either thermally or radiatively (by, e.g., ultraviolet or electron beam irradiation).

Based on the manner in which they are applied, three basic types of silicone release coatings used in the pressure sensitive adhesive industry are known: solventborne, waterborne emulsions, and solvent free coatings. Each type has advantages and disadvantages. Solventborne silicone release coatings have been used extensively but, because they employ a hydrocarbon solvent, their use in recent years has tapered off due to increasingly strict air pollution regulations, high energy requirements, and high cost. Indeed, the energy requirements of solvent recovery or incineration generally exceed that of the coating operation itself.

Waterborne silicone emulsion release systems are as well known as solvent systems, and have been used on a variety of pressure sensitive products, including tapes, floor tiles, and vinyl wall coverings. Their use has been limited, however, by problems associated with applying them to paper substrates. Water swells paper fibers, destroying the dimensional stability of the release liner backing and causing sheet curling and subsequent processing difficulties.

Solventless silicone release coatings have grown in recent years and now represent a major segment of the silicone release coating market. Like other silicone coatings, they must be cured after being applied to the flexible liner substrate. Curing produces a cross-linked film that resists penetration by the pressure sensitive adhesive.

Informative descriptions of various release materials, their characteristics, and incorporation in laminate assemblies are provided in US Patents 5,728,469; 6,486, 267; and US Published Patent Application 2005/0074549, owned by the assignee of the present application. It is also contemplated that various waxes known in the art could be used for the release material or utilized in the release layer.

The preferred cover laminates utilize release layers that are relatively thin. For example, a typical release layer thickness is from about 1 to about 4 microns. Preferably, the thickness of the release layer is from about 1 to about 2 microns.

Cover Inner Substrate

The multilayer cover laminate includes an inner substrate. The inner substrate provides support for the cover laminate and particularly for the layers disposed adjacent to the inner substrate. Representative materials for the inner substrate include those noted herein for the outer substrate. In addition, it may be preferred to utilize a biaxially-oriented polypropylene (BOPP) material. These materials provide cost savings as they are relatively inexpensive, and they have sufficient stiffness to dispense well. Another preferred material for use in the inner substrate layer is polyethylene terephthalate (PET). The previously noted PVC and OPA polymeric materials may also be suitable for use in this layer.

The inner substrate thickness typically ranges from about 12 to about 60 microns, and preferably from about 12 to about 25 microns. The present invention includes the use of thicknesses greater than or lesser than these thicknesses.

Optionally, the inner substrate can incorporate a slip agent therein or thereon. The slip agent, when incorporated as a separate coating, can be very thin, preferably around 1 micron in thickness and can comprise, for example, silicon based slip agents.

**Cover Heat Sealing Layer**

The multilayer cover laminate includes a heat sealing layer. Preferably, the heat sealing layer is disposed along the underside or inner face of the cover laminate that contacts a corresponding face of the container upon thermal bonding of the cover to the container.

The heat sealing layer is a layer which is activated by heat to allow the layer to bond to a plastic substrate. Materials for the heat sealing layer include, but are not limited to, the following film-forming materials used alone or in combination such as polyethyelene, metallocene catalyzed polyolefins, syndiotactic polystyrene, syndiotactic polypropylene, cyclic polyolefins, polyethylene methyl acrylic acid, polyethylene ethyl acrylate, polyethylene methyl acrylate, acrylonitrile butadiene styrene polymer, polyethylene vinyl alcohol, polyethylene vinyl acetate, nylon, polybutylene, polystyrene, polyurethane, polysulfone, polyvinylidene chloride, polypropylene, polycarbonate, polymethyl pentene, styrene maleic anhydride polymer, styrene acrylonitrile polymer, ionomers based on sodium or zinc salts of ethylene/methacrylic acid, polymethyl methacrylates, cellulosics, fluoroplastics, polyacrylonitriles, and thermoplastic polyesters. Preferably, PE is used in the heat sealing layer, more preferably, a blend of PE and EVA, such as for example, a blend of PE and EVA with special antiblock and antistatic additives. Another preferred material for use in the heat sealing layer is glycol-modified polyethylene terephthalate (PETG). A most preferred material for the heat sealing layer is linear low density polyethylene (LLDPE).

The thickness of the heat sealing layer may vary according to requirements of the packaging assembly. Typical thicknesses of this layer are from about 15 to about 90 microns and preferably from about 30 to about 60 microns.

The heat sealing layer is designed to be activated at temperatures known to those skilled in the art. While the heat sealing layer may activate at temperatures below those specified for activation, the heat sealing layer is designed to activate at certain temperatures based on the substrate material. Preferably, the heat sealing layer activates at temperatures between about 80°C, more preferably about 90°C to about 155°C, more preferably about 150°C, more preferably the heat sealing layer activates at temperatures between about 110°C to about 140°C, and most preferably the heat sealing layer activates at temperatures between about 120°C to about 130°C. Preferably, pressure is also applied to the respective surfaces during heat sealing.

**Cover Printing Layer**

An optional printing layer may be disposed on the previously described cover outer substrate. The printing layer serves to receive and retain one or more inks deposited on the printing layer. The ink(s) constitute indicia or other markings for the cover laminate and package assembly. The printing layer can be formed from a wide range of materials typically known to those skilled in the art. For example, a variety of polyvinyl alcohol (PVA) and cellulose-based materials can be used for the printing layer.

The printing layer typically ranges from about 3 to about 20 microns in thickness and preferably, from about 3 to about 8 microns in thickness.

**Further Aspects of the Cover**

Another significant feature of the embodiment cover laminate is the provision of a cut, score, or slit in at least the heat sealing layer of the cover. Preferably, the cut, score, or slit extends through the heat sealing layer, the inner substrate of the cover laminate and the release layer. The cut, score, or slit, which can be a solid die cut or perforated die cut, preferably extends at least partially and more preferably about the entire periphery of the cover so as to correspond to a peripheral region defined about the container opening. The cut greatly facilitates initial opening of a sealed package. As explained in greater detail herein, the cut is preferably located at a location on the cover laminate inward of a heat sealing region between the cover and container. When opening a sealed package, the cover laminate is separated into two portions, an outer separable portion and an inner separable portion. The separation of these portions from one another occurs along an interface generally defined between the pressure sensitive adhesive layer and the release layer. The cut provides that separation occurs only in regions of the cover adjacent the heat sealing regions. Separation does not occur in other regions of the cover laminate. As a result, upon initially opening the sealed package, as the cover laminate is pulled from its sealed position, separation of the cover only occurs along the outer periphery of the container (and cover) to thereby expose the pressure sensitive adhesive and the release layer. The middle region of the cover does not separate and so is pulled from the container to thereby provide access to the interior of the container. The provision of the cut, score, or slit enables the outer separable cover portion to separate from the inner cover portion that remains thermally bonded to the container. The cut, score or slit can be formed in the cover laminate in a variety of ways, however, a preferred method is to die cut the slit through the sealing layer, inner substrate, and release layer.

It is also contemplated that by not forming the cut, score or slit in select regions of the cover laminate, a hinge or bridging cover portion can be provided. Thus, for example, the cut could be provided along three of four sides of a rectangular shaped cover that is subsequently sealed to a container. The side of the cover free of the cut would then serve as a hinge upon initial and later openings of the container.

Another reason for the provision of the cut, score or slit in the noted layer(s) of the cover laminate, is that such a cut enables control of the contact surface area between the pressure sensitive adhesive layer and the release layer. The ability to readily control the amount, configuration, and shape of the contact area enables direct control over the resealing strength between the outer separable portion of the cover and the inner separable portion of the cover. As will be appreciated, for applications in which greater resealing strength is desired, the contact area can be readily increased during design and/or manufacturing. And for applications in which less resealing strength is desired, the contact area can be easily reduced in design and/or manufacturing.

Another preferred aspect of the preferred embodiment cover laminate is that by appropriate selection of the materials that the pressure sensitive adhesive contacts, i.e. the material layers disposed immediately adjacent to the pressure sensitive adhesive in the cover laminate, the surface energy of the exposed face of each material layer can be tailored to provide desired sealing characteristics such as particular resealing strengths. For example, if a low resealing strength is desired, a release material having a relatively low surface energy such as a silicone release material could be used immediately adjacent to the pressure sensitive adhesive layer. Furthermore, selection and arrangement of appropriately engineered materials for use in the layers immediately adjacent to the pressure sensitive adhesive could be used to achieve differences in tack to ensure or at least promote, retention of the adhesive with one layer as compared to another layer. For example, by appropriate selection and use of materials for the release layer and the layer disposed on an opposite face of the pressure sensitive adhesive layer, retention of the adhesive with the outer separable cover portion as opposed to remaining on the inner cover portion bonded to the container can be achieved.

Specifically, in accordance with the present invention, the level of adhesion between the pressure sensitive adhesive and one or more layer(s) immediately adjacent the adhesive, e.g. the release layer, is controlled. The level of adhesion is preferably controlled by (i) the use of a release layer disposed immediately adjacent to the pressure sensitive adhesive layer and most preferably disposed between the adhesive layer and the inner substrate in the cover laminate; (ii) the configuration and surface area of the release layer exposed after initial opening of the cover; (iii) appropriate selection of release materials and/or materials having desired surface energies used in the release layer; (iv) appropriate selection of other materials in the cover laminate, namely the pressure sensitive adhesive material and the material of the layer disposed immediately adjacent the face of the pressure sensitive adhesive opposite that of the release layer; (v) the configuration and surface area of the pressure sensitive adhesive material exposed after initial opening of the cover; and (vi) the thickness of the pressure sensitive adhesive layer.

By controlling the level of adhesion, preferably by one or more, or all of factors (i) - (vi), the pressure sensitive adhesive layer can be more reliably retained with the outer separable portion of the cover.

This strategy of the preferred embodiment cover laminates described herein provides a significant advantage over prior art cover assemblies and specifically, the reclosable packing system that is described in the previously addressed US Patent 6,056,141. The packing system of the '141 patent uses a "repositionable" adhesive. Thus, in that type of system, the adhesive is retained with a portion of the lid due to the adhesive being repositionable with respect to an underlying support film. The system of the '141 patent does not rely upon any other strategy for ensuring or at least attempting to keep the adhesive with the removable lid portion. Reliance solely upon the properties of the pressure sensitive adhesive severely limits the range of applications of the resulting packing system.

It is preferred that particular tack and peel characteristics exist with regard to the pressure sensitive adhesive and the layers disposed on opposite sides or faces of the pressure sensitive adhesive layer. It is desirable that a difference regarding these characteristics exists between the two layers on opposite sides of the pressure sensitive adhesive layer. Specifically, it is desired that a particular minimum difference exists between the tack and peel characteristics associated with (i) the pressure sensitive adhesive and the layer immediately adjacent to one face of the adhesive, and (ii) the pressure sensitive adhesive and the layer immediately adjacent to an opposite face of the adhesive.

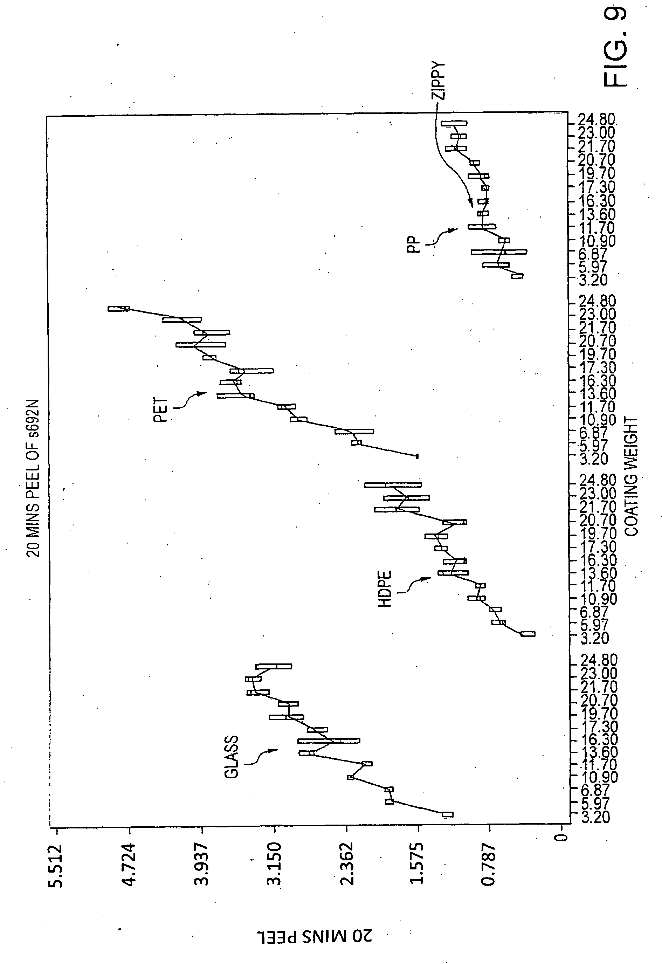

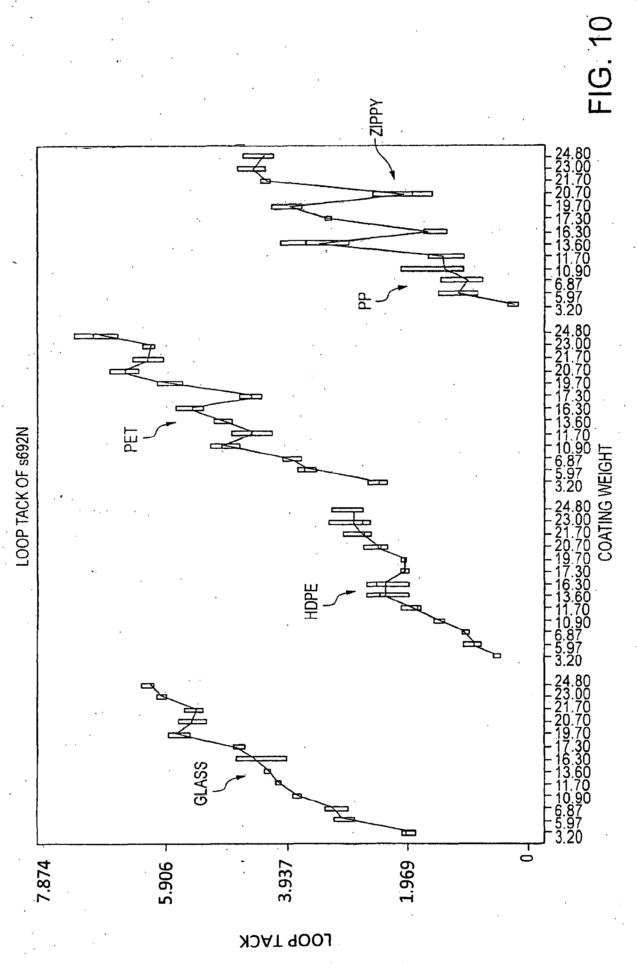

For a cover laminate utilizing a pressure sensitive adhesive layer disposed between an inner substrate of biaxially oriented polypropylene (BOPP) and an outer substrate of polyethylene terephthalate (PET), it is preferred that the difference in tack and peel characteristics between these two substrates and a respective face of the pressure sensitive adhesive, be at least 0.197 N/cm and preferably at least 0.787 N/cm. The greater adhesive bond preferably exists between the outer substrate and a corresponding face of the pressure sensitive adhesive as compared to the adhesive bond existing between the inner substrate and an opposite face of the pressure sensitive adhesive. Referring to Figures 9 and 10, both peel and loop tack for a preferred pressure sensitive adhesive commercially available under the designation Fasson® S692N, exhibit a difference of greater than 1.181 N/cm when comparing adhesion between an outer substrate of PET and an inner substrate of BOPP. This ensures that the pressure sensitive adhesive remains with the outer substrate when the cover laminate is at least partially separated along a separation interface, upon opening of the cover and container assembly.

Appropriate selection of the pressure sensitive adhesive and the release layer material primarily governs the force needed to initially open a sealed container, and also the amount of force necessary for subsequent opening operations after an initial opening. This force, referred to as the "opening force," is the force that a consumer must exert upon the cover in order to separate the cover laminate into its respective portions and thereby open the container. Typically, to provide a relatively easy to open container, the opening force should be less than 5.906 N/cm. Also, it is desirable that some minimum force be necessary so as to prevent unintended openings of the container. Thus, typically, a minimum force of at least 0.787 N/cm and preferably greater than 1.181 N/cm is targeted.

Referring further to the previously noted US Patent 6,056,141, the lid assembly can use a layer of polypropylene (PP) as a support film along an upper face of the adhesive. This construction would almost certainly result in adhesive remaining on a lower support layer, along an opposite face of the adhesive. It is well known in the art that polypropylene films typically exhibit relatively low surface energies, and hence would not provide sufficient bond with the adhesive. Thus this construction would not retain the adhesive with the lid. As will be appreciated, this is undesirable since adhesive existing on a lower support layer, i.e. on the container, significantly increases the likelihood of contact between food and the adhesive.

In a particularly preferred embodiment, a multilayer laminate is provided comprising at least two polymeric films having a layer of a pressure sensitive adhesive disposed between the polymeric films. The materials for the two polymeric films are preferably selected such that they exhibit particular physical characteristics relative to one another. Specifically, the physical characteristics relate to the coefficient of thermal expansion (CTE) for each of the film materials. Generally, the term "coefficient of thermal expansion" is the ratio of a material's increased dimension at one temperature to the material's original dimension, upon a temperature change of 1°C. Since nearly all materials expand upon heating, the material's increased dimension occurs after heating the material. Similarly, another term, "coefficient of thermal shrinkage" (CTS), refers to the ratio of a material's reduced dimension at one temperature to the material's original dimension upon a temperature change of 1°C.

The terms "delta CTE" or "delta CTS" (also denoted as ΔCTE or ACTS) refer to the absolute difference between two CTE values (or CTS values) for two materials. It is important when determining a delta CTE (or delta CTS) value, to always compare CTE (or CTS) values which are taken with regard to the same material orientation or direction. For example, films are known which exhibit different degrees or extents of shrinkage depending upon whether the shrink is measured in a machine direction (MD) or a cross direction (CD). Thus, when determining a machine direction delta CTE (also denoted as MD ΔCTE) value from two CTE values for films, it is important to compare the machine direction CTE (MD CTE) value for one film with the machine direction CTE (MD CTE) value for the other film. Similarly, when determining a cross direction delta CTE (also denoted as CD ΔCTE) value from two CTE values for films, it is important to compare the cross direction CTE (CD CTE) value for one film with the cross direction CTE (CD CTE) value for the other film. This same practice applies when determining machine direction delta CTS values and cross direction delta CTS values.

In accordance with the present invention, it has been discovered that improved sealing efficacy and other benefits result when a multilayer laminate having a pair of polymeric films separated by a layer of pressure sensitive adhesive exhibits a two dimensional vector delta CTE (or CTS) value (periodically referred to herein as "Q") of less than 1,000 μm/m °C, preferably less than 500 μm/m °C, and most preferably less than 100 μm/m °C. The two dimensional vector delta CTE (or CTS) value, "Q" is determined by the following formula (I):

$$Q = [(MD \ \Delta \ CTE)^2 + (CD \ \Delta \ CTE)^2]^{1/2} \qquad\qquad (I)$$

As evident from a review of the formula (I), the value Q is a function of the delta CTE as measured in a machine direction and the delta CTE as measured in a cross direction. Specifically, Q is the square root of the sum of the squared value of the machine direction delta CTE for two films and the squared value of the cross direction delta CTE for the same two films. The Q value is thus based upon two different materials. And, the Q value is also based upon the delta CTE values taken in the machine direction and the cross direction of the same two films. It will be appreciated that a Q value based upon CTS values can also be readily determined.

A collection of four polymeric films was evaluated and the following data provides additional insight into identifying a pair of films that satisfy the preferred Q values. Tables 1-4 set forth below list dimensional changes (Table 1), coefficient of thermal expansion (CTE) values (Table 2), delta CTE values (Table 3), and Q values (Table 4) for four samples of polymeric films, designated as samples A-D. Sample A is a polyethylene terephthalate (PET) film. Sample B is another grade of a PET film. Sample C is still another grade of a PET film. Sample D is a biaxially oriented polypropylene film.

Specifically, samples formed from each of the films A-D were heated from 0°C to 155°C and their change in dimension in a machine direction (MD) and in a cross direction (CD) recorded every 5°C. Typically, samples can be heated at a rate of 10°C/minute in a thermomechanical analyzer using a load of 0.05 N, such as a Q400 system available from TA Instruments of New Castle, DE.

Table 1 - Dimensional Changes

| | Dimension Change | | | | | | | |
|---|---|---|---|---|---|---|---|---|
| | Sample A MD | Sample A CD | Sample B MD | Sample B CD | Sample C MD | Sample C CD | Sample D MD | Sample D CD |
| Sample Length(μm) | 16008.4 | 16020.8 | 15961.6 | 16015.5 | 16019.1 | 16024.2 | 15972 | 16024 |
| Temperature °C | μm/°C | μm/°C | μm/°C | μm/°C | μm/°C | μm/°C | μm/°C | μm/°C |
| 0 | 0 | 0 | 0 | 0 | 0 | 0 | 0 | 0.4937 |
| 5 | 0.143 | 0.1135 | 0.5828 | 0.3894 | 0.2171 | 0.141 | 0.8559 | 0.5178 |
| 10 | 0.1848 | 0.1751 | 0.7317 | 0.4981 | 0.3196 | 0.248 | .1.145 | 0.5631 |
| 15 | 0.2133 | 0.2062 | 0.7961 | 0.5264 | 0.3554 | 0.2978 | 1.432 | 0.5931 |
| 20 | 0.2262 | 0.227 | 0.8299 | 0.5027 | 0.3819 | 0.3291 | 1.684 | 0.595 |
| 25 | 0.2368 | 0.246 | 0.8518 | 0.4613 | 0.3972 | 0.3477 | 1.692 | 0.5888 |
| 30 | 0.2337 | 0.2668 | 0.8618 | 0.4149 | 0.4014 | 0.3644 | 1.659 | 0.4372 |
| 35 | 0.2314 | 0.284 | 0.8013 | 0.3823 | 0.4129 | 0.3695 | 1.896 | 0.3506 |
| 40 | 0.2394 | 0.2902 | 0.7111 | 0.4064 | 0.4248 | 0.3754 | 2.181 | 0.3997 |

(continued)

| | Dimension Change | | | | | | | |
|---|---|---|---|---|---|---|---|---|
| | Sample A MD | Sample A CD | Sample B MD | Sample B CD | Sample C MD | Sample C CD | Sample D MD | Sample D CD |
| Sample Length($\mu$m) | 16008.4 | 16020.8 | 15961.6 | 16015.5 | 16019.1 | 16024.2 | 15972 | 16024 |
| Temperature °C | $\mu$m/°C | $\mu$m/°C | $\mu$m/°C | $\mu$m/°C | $\mu$m/°C | $\mu$m/°C | $\mu$m/°C | $\mu$m/°C |
| 45 | 0.2434 | 0.2905 | 0.7138 | 0.3415 | 0.4287 | 0.3726 | 2.304 | 0.461 |
| 50 | 0.2391 | 0.2821 | 0.7519 | 0.2572 | 0.4259 | 0.3677 | 2.434 | 0.4809 |
| 55 | 0.2353 | 0.2672 | 0.7177 | 0.1934 | 0.4266 | 0.3611 | 2.629 | 0.5269 |
| 60 | 0.2337 | 0.2613 | 0.6807 | 0.2277 | 0.414 | 0.3621 | 2.924 | 0.5786 |
| 65 | 0.2336 | 0.2665 | 0.653 | 0.2327 | 0.3972 | 0.3661 | 3.402 | 0.6079 |
| 70 | 0.2396 | 0.2812 | 0.6163 | 0.2333 | 0.3655 | 0.355 | 4.006 | 0.6368 |
| 75 | 0.2379 | 0.2977 | 0.569 | 0.2386 | 0.3626 | 0.3577 | 4.409 | 0.717 |
| 80 | 0.2457 | 0.3149 | 0.519 | 0.2492 | 0.5093 | 0.3826 | 4.353 | 0.8386 |
| 85 | 0.2221 | 0.3603 | 0.4759 | 0.2841 | 0.4069 | 0.4524 | 4.213 | 0.9178 |
| 90 | 0.07155 | 0.4543 | 0.4363 | 0.3748 | 0.3266 | 0.5844 | 3.816 | 0.944 |
| 95 | -0.1105 | 0.6095 | 0.3667 | 0.5467 | 0.2579 | 0.7604 | 3.22 | 1.169 |
| 100 | -0.6011 | 0.8104 | 0.2475 | 0.7338 | 0.3449 | 0.9446 | 2.379 | 1.217 |
| 105 | -1.235 | 1.058 | 0.08294 | 0.9615 | -0.1588 | 1.12 | 1.222 | 1.012 |
| 110 | -1.686 | 1.263 | -0.1013 | 1.223 | -0.6055 | 1.249 | -0.4861 | 1.067 |
| 115 | -1.704 | 1.367 | -0.3764 | 1.478 | -0.5493 | 1.1 | -3.108 | 0.6287 |
| 120 | -1.568 | 1.441 | -0.9711 | 1.559 | -0.2968 | 1.096 | -6.384 | -1.075 |
| 125 | -1.391 | 1.516 | -1.2 | 1.336 | -0.371 | 1.209 | -8.705 | -4.046 |
| 130 | -1.243 | 1.581 | -0.771 | 1.235 | -0.298 | 1.278 | -8.626 | -6.789 |
| 135 | -1.156 | 1.628 | -0.2197 | 1.536 | -0.1432 | 1.264 | -7.932 | -10.24 |
| 140 | -1.131 | 1.675 | -0.0993 | 1.957 | -0.2013 | 1.212 | -10.59 | -16.23 |
| 145 | -1.174 | 1.719 | -0.6278 | 2.314 | -0.2599 | 1.236 | -15.37 | -27.15 |
| 150 | -1.278 | 1.793 | -1.573 | 2.223 | -0.2706 | 1.315 | -17.47 | -42.19 |
| 155 | -1.401 | 1.87 | -2.093 | 2.288 | -0.6101 | 1.167 | -21.13 | -59.73 |

Then, the coefficient of thermal expansion (CTE) for each of the samples was determined for both machine direction and cross direction every 5°C. The CTE values are noted in Table 2.

Table 2 - Coefficient of Thermal Expansion (CTE)

| | CTE($\mu$m/m°C) | | | | | | | |
|---|---|---|---|---|---|---|---|---|
| | Sample A MD | Sample A CD | Sample B MD | Sample B CD | Sample C MD | Sample C CD | Sample D MD | Sample D CD |
| Temperature °C | | | | | | | | |
| 0 | 0.00 | 0.00 | 0.00 | 0.00 | 0.00 | 0.00 | 0.00 | 30.81 |
| 5 | 8.93 | 7.08 | 36.51 | 24.31 | 13.55 | 8.80 | 53.59 | 32.31 |
| 10 | 11.54 | 10.93 | 45.84 | 31.10 | 19.95 | 15.48 | 71.69 | 35.14 |
| 15 | 13.32 | 12.87 | 49.88 | 32.87 | 22.19 | 18.58 | 89.66 | 37.01 |
| 20 | 14.13 | 14.17 | 51.99 | 31.39 | 23.84 | 20.54 | 105.43 | 37.13 |
| 25 | 14.79 | 15.36 | 53.37 | 28.80 | 24.80 | 21.70 | 105.94 | 36.74 |
| 30 | 14.60 | 16.65 | 53.99 | 25.91 | 25.06 | 22.74 | 103.87 | 27.28 |
| 35 | 14.45 | 17.73 | 50.20 | 23.87 | 25.78 | 23.06 | 118.71 | 21.88 |
| 40 | 14.95 | 18.11 | 44.55 | 25.38 | 26.52 | 23.43 | 136.55 | 24.94 |
| 45 | 15.20 | 18.13 | 44.72 | 21.32 | 26.76 | 23.25 | 144.25 | 28.77 |

(continued)

| | CTE($\mu$m/m°C) | | | | | | | |
|---|---|---|---|---|---|---|---|---|
| | Sample A MD | Sample A CD | Sample B MD | Sample B CD | Sample C MD | Sample C CD | Sample D MD | Sample D CD |
| Temperature °C | | | | | | | | |
| 50 | 14.94 | 17.61 | 47.11 | 16.06 | 26.59 | 22.95 | 152.39 | 30.01 |
| 55 | 14.70 | 16.68 | 44.96 | 12.08 | 26.63 | 22.53 | 164.60 | 32.88 |
| 60 | 14.60 | 16.31 | 42.65 | 14.22 | 25.84 | 22.60 | 183.07 | 36.11 |
| 65 | 14.59 | 16.63 | 40.91 | 14.53 | 24.80 | 22.85 | 213.00 | 37.94 |
| 70 | 14.97 | 17.55 | 38.61 | 14.57 | 22.82 | 22.15 | 250.81 | 39.74 |
| 75 | 14.86 | 18.58 | 35.65 | 14.90 | 22.64 | 22.32 | 276.05 | 44.75 |
| 80 | 15.35 | 19.66 | 32.52 | 15.56 | 31.79 | 23.88 | 272.54 | 52.33 |
| 85 | 13.87 | 22.49 | 29.82 | 17.74 | 25.40 | 28.23 | 263.77 | 57.28 |
| 90 | 4.47 | 28.36 | 27.33 | 23.40 | 20.39 | 36.47 | 238.92 | 58.91 |
| 95 | -6.90 | 38.04 | 22.97 | 34.14 | 16.10 | 47.45 | 201.60 | 72.95 |
| 100 | -37.55 | 50.58 | 15.51 | 45.82 | 21.53 | 58.95 | 148.95 | 75.95 |
| 105 | -77.15 | 66.04 | 5.20 | 60.04 | -9.91 | 69.89 | 76.51 | 63.16 |
| 110 | -105.32 | 78.84 | -6.35 | 76.36 | -37.80 | 77.94 | -30.43 | 66.59 |
| 115 | -106.44 | 85.33 | -23.58 | 92.29 | -34.29 | 68.65 | -194.59 | 39.23 |
| 120 | -97.95 | 89.95 | -60.84 | 97.34 | -18.53 | 68.40 | -399.70 | -67.09 |
| 125 | -86.89 | 94.63 | -75.18 | 83.42 | -23.16 | 75.45 | -545.02 | -252.50 |
| 130 | -77.65 | 98.68 | -48.30 | 77.11 | -18.60 | 79.75 | -540.07 | -423.68 |
| 135 | -72.21 | 101.62 | -13.76 | 95.91 | -8.94 | 78.88 | -496.62 | -639.04 |
| 140 | -70.65 | 104.55 | -6.22 | 122.19 | -12.57 | 75.64 | -663.04 | -1012.86 |
| 145 | -73.34 | 107.30 | -39.33 | 144.49 | -16.22 | 77.13 | -962.31 | -1694.33 |
| 150 | -79.83 | 111.92 | -98.55 | 138.80 | -16.89 | 82.06 | -1093.79 | -2632.93 |
| 155 | -87.52 | 116.72 | -131.13 | 142.86 | -38.09 | 72.83 | -1322.94 | -3727.53 |

After determining CTE values for each set of samples for the films A-D, delta CTE values were then determined. Specifically, machine direction and cross direction delta CTE values were determined for samples A and B (denoted as ∆CTE for "Samples A/B"), samples A and C, and for samples A and D. These delta CTE values are set forth below in Table 3.

Table 3 - Delta CTE Values

| | ∆ CTE($\mu$m/m°C) | | | | | |
|---|---|---|---|---|---|---|
| | Samples A/B MD | Samples A/B CD | Samples A/C MD | Samples A/C CD | Samples A/D MD | Samples A/D CD |
| Temperature °C | | | | | | |
| 0 | 0.00 | 0.00 | 0.00 | 0.00 | 0.00 | 30.81 |
| 5 | 27.58 | 17.23 | 4.62 | 1.71 | 44.65 | 25.23 |
| 10 | 34.30 | 20.17 | 8.41 | 4.55 | 60.14 | 24.21 |
| 15 | 36.55 | 20.00 | 8.86 | 5.71 | 76.33 | 24.14 |
| 20 | 37.86 | 17.22 | 9.71 | 6.37 | 91.30 | 22.96 |
| 25 | 38.57 | 13.45 | 10.00 | 6.34 | 91.14 | 21.39 |
| 30 | 39.39 | 9.25 | 10.46 | 6.09 | 89.27 | 10.63 |
| 35 | 35.75 | 6.14 | 11.32 | 5.33 | 104.25 | 4.15 |
| 40 | 29.60 | 7.26 | 11.56 | 5.31 | 121.60 | 6.83 |
| 45 | 29.52 | 3.19 | 11.56 | 5.12 | 129.05 | 10.64 |
| 50 | 32.17 | 1.55 | 11.65 | 5.34 | 137.46 | 12.40 |

(continued)

| Δ CTE(μm/m°C) | | | | | | |
|---|---|---|---|---|---|---|
| | Samples A/B MD | Samples A/B CD | Samples A/C MD | Samples A/C CD | Samples A/D MD | Samples A/D CD |
| Temperature °C | | | | | | |
| 55 | 30.27 | 4.60 | 11.93 | 5.86 | 149.90 | 16.20 |
| 60 | 28.05 | 2.09 | 11.25 | 6.29 | 168.47 | 19.80 |
| 65 | 26.32 | 2.10 | 10.20 | 6.21 | 198.41 | 21.30 |
| 70 | 23.64 | 2.99 | 7.85 | 4.60 | 235.85 | 22.19 |
| 75 | 20.79 | 3.68 | 7.77 | 3.74 | 261.18 | 26.16 |
| 80 | 17.17 | 4.10 | 16.45 | 4.22 | 257.19 | 32.68 |
| 85 | 15.94 | 4.75 | 11.53 | 5.74 | 249.90 | 34.79 |
| 90 | 22.86 | 4.95 | 15.92 | 8.11 | 234.45 | 30.55 |
| 95 | 29.88 | 3.91 | 23.00 | 9.41 | 208.51 | 34.91 |
| 100 | 53.06 | 4.77 | 59.08 | 8.36 | 186.50 | 25.36 |
| 105 | 82.34 | 6.00 | 67.23 | 3.86 | 153.66 | 2.88 |
| 110 | 98.97 | 2.47 | 67.52 | 0.89 | 74.89 | 12.25 |
| 115 | 82.86 | 6.96 | 72.15 | 16.68 | 88.15 | 46.09 |
| 120 | 37.11 | 7.40 | 79.42 | 21.55 | 301.75 | 157.03 |
| 125 | 11.71 | 11.21 | 63.73 | 19.18 | 458.12 | 347.12 |
| 130 | 29.34 | 21.57 | 59.04 | 18.93 | 462.42 | 522.36 |
| 135 | 58.45 | 5.71 | 63.27 | 22.74 | 424.41 | 740.66 |
| 140 | 64.43 | 17.64 | 58.08 | 28.92 | 592.38 | 1117.41 |
| 145 | 34.00 | 37.19 | 57.11 | 30.16 | 888.97 | 1801.63 |
| 150 | 18.72 | 26.89 | 62.94 | 29.85 | 1013.96 | 2744.84 |
| 155 | 43.61 | 26.14 | 49.43 | 43.90 | 1235.42 | 3844.26 |

After determining the various noted delta CTE values, Q values for each of the three film pairs were determined. Specifically, a Q value for films A and B, films A and C, and A and D were calculated and are set forth in Table 4

Table 4 - Two Dimensional Vector Delta CTE or Q Values

| 2 Dimensional Vector Δ CTE(μm/m°C) | | | |
|---|---|---|---|
| | Samples A/B | Samples A/C | Samples A/D |
| Temperature °C | | | |
| 0 | 0.00 | 0.0 | 30.81 |
| 5 | 32.52 | 4.93 | 51.29 |
| 10 | 39.79 | 9.56 | 64.83 |
| 15 | 41.66 | 10.54 | 80.06 |
| 20 | 41.60 | 11.61 | 94.15 |
| 25 | 40.85 | 11.84 | 93.62 |
| 30 | 40.47 | 12.10 | 89.90 |
| 35 | 36.27 | 12.51 | 104.34 |
| 40 | 30.47 | 12.73 | 121.79 |
| 45 | 29.69 | 12.64 | 129.49 |
| 50 | 32.21 | 12.82 | 138.01 |
| 55 | 30.61 | 13.29 | 150.78 |
| 60 | 28.13 | 12.88 | 169.63 |
| 65 | 26.40 | 11.95 | 199.55 |
| 70 | 23.83 | 9.10 | 236.89 |

(continued)

| 2 Dimensional Vector Δ CTE(μm/m°C) | | | |
|---|---|---|---|
| | Samples A/B | Samples A/C | Samples A/D |
| Temperature °C | | | |
| 75 | 21.11 | 8.63 | 262.49 |
| 80 | 17.65 | 16.98 | 259.26 |
| 85 | 16.63 | 12.88 | 252.31 |
| 90 | 23.40 | 17.87 | 236.43 |
| 95 | 30.13 | 24.85 | 211.41 |
| 100 | 53.27 | 59.67 | 188.21 |
| 105 | 82.56 | 67.34 | 153.68 |
| 110 | 99.00 | 67.53 | 75.88 |
| 115 | 83.15 | 74.06 | 99.47 |
| 120 | 37.84 | 82.29 | 340.17 |
| 125 | 16.21 | 66.56 | 574.78 |
| 130 | 36.42 | 62.00 | 697.64 |
| 135 | 58.73 | 67.23 | 853.64 |
| 140 | 66.80 | 64.88 | 1264.72 |
| 145 | 50.39 | 64.59 | 2009.02 |
| 150 | 32.76 | 69.66 | 2926.14 |
| 155 | 50.84 | 66.11 | 4037.89 |

A representative determination of Q for a pair of films A and B at 5°C is as follows. Referring to Tables 2, 3 and 4, delta CTE values for films A and B at 5°C and a corresponding Q value is determined as follows:

$$MD\ \Delta\ CTE_{AB,\ 5°C} = (36.51 - 8.93)$$

$$= 27.58$$

$$CD\ \Delta\ CTE_{AB,\ 5°C} = (24.31 - 7.08)$$

$$= 17.23$$

$$Q_{AB,\ 5°C}\ [(27.58)^2 + (17.23)^2]^{1/2}$$

$$= 32.52$$

Referring further to Tables 3 and 4, delta CTE values for films A and D at 5°C and a corresponding Q value is determined as follows:

$$MD\ \Delta\ CTE_{AD,\ 5°C} = (53.59 - 8.93)$$

$$= 44.65$$

$$CD\ \Delta\ CTE_{AD,\ 5°C} = (32.31 - 7.08)$$

$$= 25.23$$

$$Q_{AD,\,5°C} = [(44.65)^2 + (25.23)^2]^{1/2}$$

$$= 51.29$$

Another preferred characteristic of the preferred embodiment multilayer laminates having the noted Q values is that the laminates exhibit a T-peel force within a particular range. Generally, the preferred laminates exhibit a T-peel force within a range of from about 0.079 N/cm to about 3.937 N/cm, more preferably within a range of from about 0.394 N/cm to about 2.362 N/cm, and most preferably within 0.787 N/cm to 1.575 N/cm.

The T-peel force of a laminate is determined as follows. Samples of the laminate to be tested are obtained. For example, laminated samples are provided comprising at least two polymeric films having a layer of a pressure sensitive adhesive disposed between the films. Each laminated sample has a width of 25 mm and a length of 200 mm. Each of the two polymeric films at an end of a sample are then separated from one another by pulling the ends of the film in opposite directions from each other and in a direction generally perpendicular to the longitudinal axis of the sample. The resulting configuration of the sample resembles the letter "T." Pulling the films apart from an end of the sample is continued until a 50 mm portion of each film is separated and a 150 mm portion of the laminated sample remains.

The sample is then placed in a testing device capable of measuring tensile force at various speeds. Preferably, conditions utilized at testing are a temperature of 23°C +/- 3°C, and a relative humidity of 50% +/- 5%. The tensile testing device is configured to measure tensile force over a distance of 200 mm from an initial grip to grip separation distance of 40 mm. The rate or speed of grip separation is 300 mm/minute. The sample is positioned in the testing device such that each of the films is pulled away from one another and in a direction perpendicular to the longitudinal axis of the sample. The average tensile force and standard deviation was noted over the course of testing for each sample.

In accordance with the present invention, when designing and/or preparing multilayer laminates having at least one interior adhesive layer and particularly multilayer laminates for sealing applications, the films on opposite sides of the adhesive layer are selected such that the Q value for the selected films is less than 1,000 μm/m °C, preferably less than 500 μm/m °C, and most preferably less than 100 μm/m °C. Typically, the films will be disposed immediately adjacent to the adhesive layer, however the invention includes embodiments in which one or more additional layers or regions of materials are disposed between the adhesive layer and one or both of the film layer(s). Preferably, the adhesive layer includes one or more pressure sensitive adhesives.

By utilization of these key aspects, potentially with other features of the preferred embodiment cover laminate as described herein, very specific adhesion, resealing, and opening characteristics of the cover laminate can be achieved.

**Container**

The term "container" as used herein refers to an enclosure, housing, or package that provides an interior hollow region within which, food or other items can be stored. The interior of the container can be accessible through one or more apertures or openings defined in the container, such as in a wall of the container. Alternately, the container can be formed, preferably from a relatively rigid shape-retaining material such that the container defines a recessed open interior region that is accessible through an opening or other access means formed in the container. The preferred forms of the container in accordance with the present invention exhibit one or more relatively rigid walls formed and/or arranged about an opening that provides unobstructed access to the interior of the container.

Preferably extending about the periphery of the container opening, is a lip or other structural member that defines a region for contacting and sealing with the previously described cover. Preferably, a layer of a heat sealing material is disposed along a face or at least a region of the face of the lip for subsequent contact with the heat sealing layer of the cover laminate during thermal bonding between the cover and container.

Although the preferred form of the container is a rigid wall receptacle having the previously described lip, the present invention includes the use of flexible wall enclosures such as a bag, pouch, or packet.

**Container Heat Sealing Layer**

Preferably, the heat sealing layer of the container utilizes the same or a suitably compatible material as the previously described heat sealing layer for the cover.

**Container Substrate**

The container includes a substrate that preferably provides the overall structure, strength, and shape of the container. A wide range of materials known in the art can be used for the container. The selection of the particular material largely depends upon the particular application and sealing requirements for the container assembly.

**Preferred Embodiment Package Assembly**

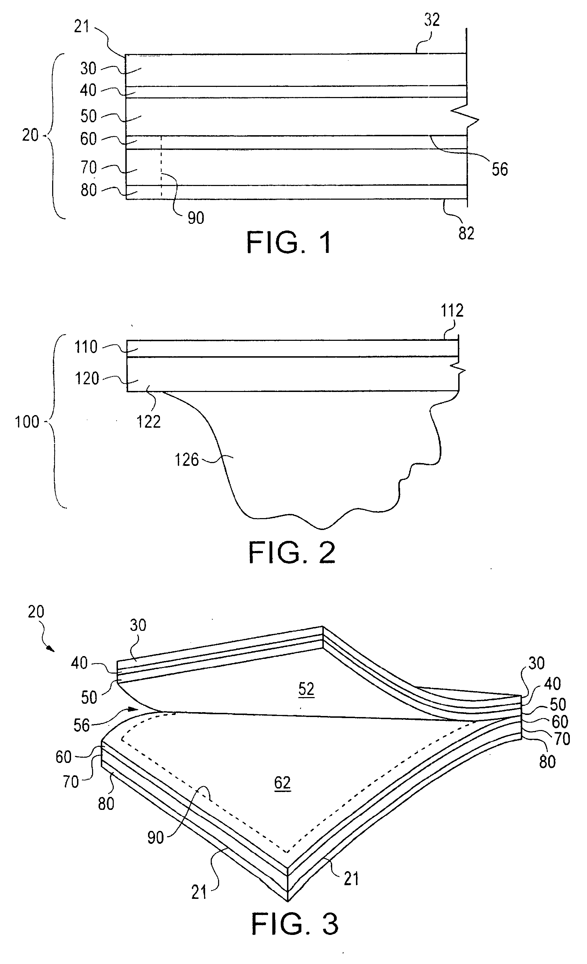

Figure 1 is a schematic view of a preferred cover laminate 20 used in a preferred embodiment package assembly in accordance with the present invention. The preferred cover laminate 20 comprises an outer substrate 30, a barrier material layer 40, a pressure sensitive adhesive layer 50, a release layer 60, an inner substrate 70, and a heat sealing layer 80. The outer substrate 30 defines an outer face 32 which can receive printing or other identifying indicia. The heat sealing layer 80 defines a lower face 82 for subsequent contact with a container during a sealing operation. A cut, score, or slit 90 extends through or at least partially through the heat sealing layer 80. The cut, score, or slit preferably extends entirely through layer 80, and the inner substrate 70, and the release layer 60. A separation interface 56 is defined between the pressure sensitive adhesive layer 50 and the release layer 60. As previously explained herein, upon opening of the container, the cover laminate 20 separates along this interface within the regions of the cover 20 that are adjacent the regions at which the heat sealing layer 80 is thermally bonded to a container (not shown in Fig. 1). The cover 20 also defines one or more outer edges 21 described in greater detail herein.

Figure 2 is a schematic view of a preferred container 100 used in the preferred embodiment package assembly of the present invention. The container 100 comprises a heat sealing layer 110, and a substrate 120 that includes a lip 122 and one or more walls 126. The heat sealing layer 110 defines an upper face 112 for subsequent contact with a cover, and more particularly, with the lower face 82 of the cover 20 shown in Figure 1.

Figure 3 is a schematic view of the preferred cover laminate 20 prior to bonding or otherwise attaching to a container, in which the cover 20 is partially separated along the separation interface 56 to reveal a lower face 52 of the pressure sensitive adhesive layer 50 and an upper face 62 of the release layer 60. This figure illustrates a preferred configuration for the score 90 extending at least partially through the release layer 60, the inner substrate 70, and the heat sealing layer 80. Preferably, the score 90 extends along the outer periphery of the cover 20.

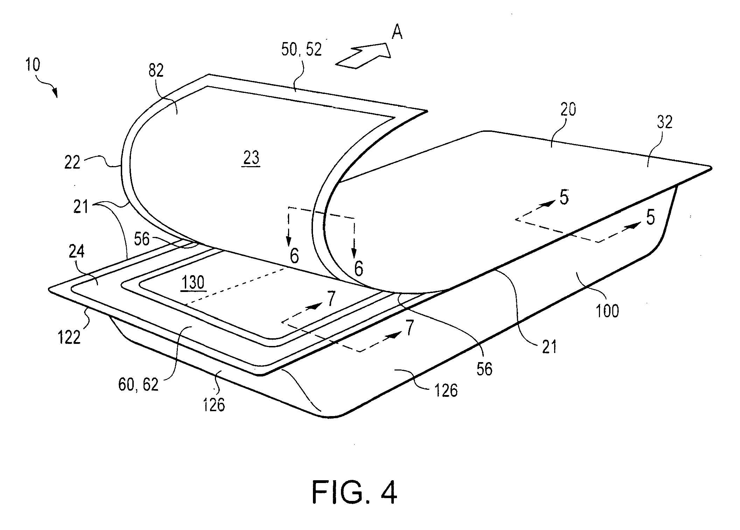

Figure 4 is a perspective view of a preferred embodiment package assembly 10 including the cover 20 and the container 100. Figure 4 illustrates the package 10 being opened, after the cover 20 and the container 100 have been thermally bonded to one another via their respective heat sealing layers 80 and 110 (see Figures 1 and 2, respectively) along the lip 122 of the container 100. The package 10 is opened by pulling an end or portion of the cover 20 in the direction of arrow A, thereby separating the cover 20 into two portions. An inner separable portion 24 remains thermally bonded to the lip 122 of the container 100. An outer separable portion 22 results, and its withdrawal from covering the container enables access to a container interior 130. Separation of the cover 20 into its portions 22 and 24 occurs along the separation interface 56 in the region of the cover between the score 90 and the outer edge 21 of the cover 20, shown in Figures 1, 3 and 4. Separation of the cover 20 does not occur in the interior region, shown in Figure 4 as region 23. Upon cover separation, a region of the lower face 52 of the pressure sensitive adhesive 50 is exposed in the cover outer separable portion 22. And, a region of the upper face 62 of the release layer 60 is exposed in the cover inner separable portion 24.

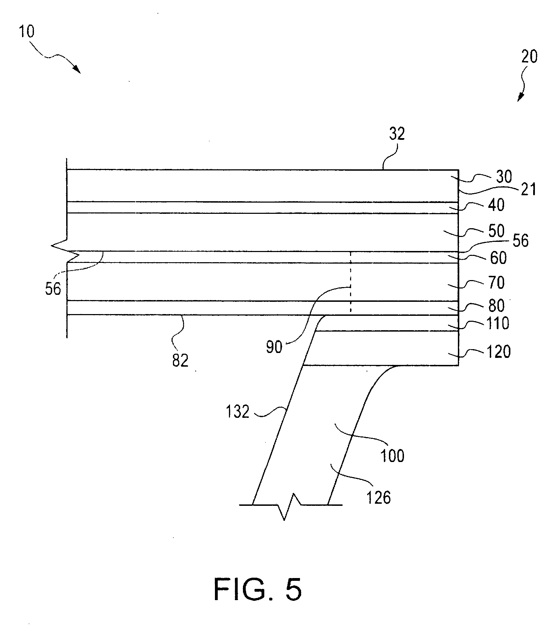

Figure 5 is a partial cross sectional view of the package assembly 10 taken along line 5-5 shown in Figure 4. The view of Figure 5 illustrates the configuration of the cover 20 and the container 100 after thermal bonding to one another and prior to initial opening of the sealed package 10. Specifically, heat sealing the cover 20 and the container 100 occurs along the interface between the heat sealing layers 80 and 110. Figure 5 illustrates a heat sealing (or heat sealed) region generally extending between the score 90 and the outer edge 21 of the cover 20, and generally between the heat sealing layers 80 and 110.

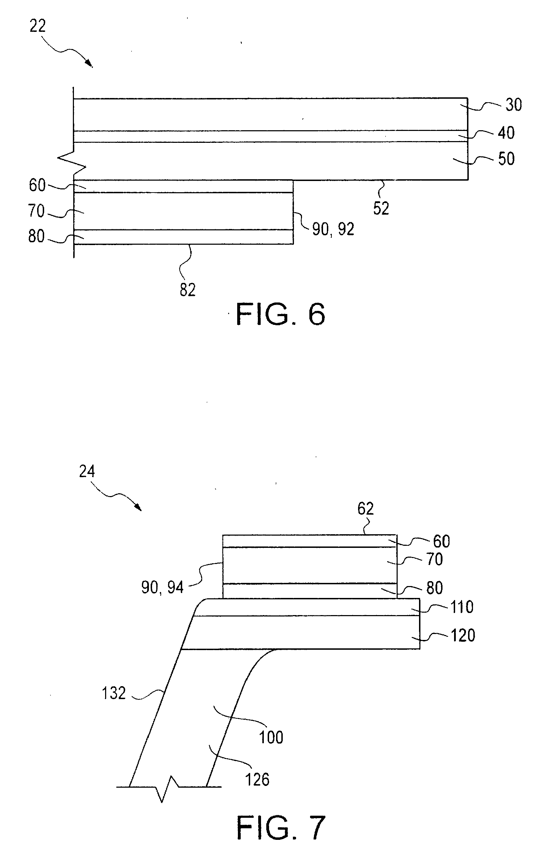

Figure 6 is a partial cross sectional view of the package assembly 10 taken along line 6-6 in Figure 4. Figure 6 illustrates the configuration of the cover outer separable portion 22 after the cover 20 is thermally bonded to the container 100 and after initial opening of the package 10. Figure 6 also illustrates a first cut face 92 that is exposed along a laterally directed edge of the layers 60, 70, and 80 of the cover 20. The cut face 92 results from forming the previously described score 90 and is exposed upon separating the cover 20 into portions 22 and 24.

Figure 7 is a partial cross sectional view of the package assembly 10 taken along line 7-7 in Figure 4. Figure 7 illustrates the configuration of the cover inner separable portion 24 after the cover 20 is thermally bonded to the container and after initial opening of the package 10. The container 100 defines an interior surface 132. It is contemplated that one or more sealing, barrier, and/or food-compatible materials may be deposited or otherwise coated along this interior surface 132. Figure 7 also illustrates a second cut face 94 that is exposed along a laterally directed edge of the layers 60, 70, and 80 of the cover 20. The cut face 94 results from forming the previously described score 90 and is exposed upon separating the cover 20 into portions 22 and 24.

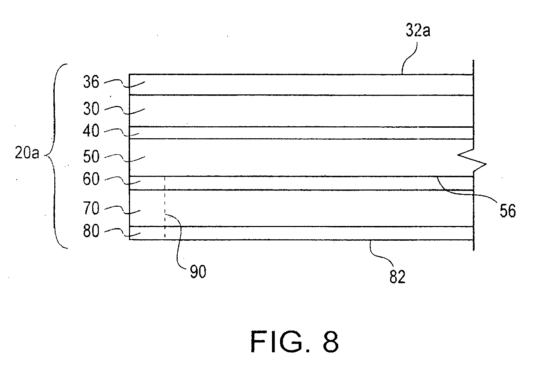

Figure 8 is a schematic view of another preferred cover laminate 20a used in a preferred embodiment package assembly in accordance with the present invention. The preferred cover laminate 20a comprises a printing layer 36, an outer substrate 30, a barrier material layer 40, a pressure sensitive adhesive layer 50, a release layer 60, an inner substrate 70, and a heat sealing layer 80. The printing layer 36 defines an outer face 32a which can receive printing or other identifying indicia. The heat sealing layer 80 defines a lower face 82 for subsequent contact with a container during a sealing operation. A cut, score, or slit 90 extends through or at least partially through the heat sealing layer 80. The cut, score, or slit preferably extends entirely through layer 80, and the inner substrate 70, and the release layer 60. A separation interface 56 is defined between the pressure sensitive adhesive layer 50 and the release layer 60. As previously explained herein, upon opening of the container, the cover laminate 20 separates along this interface within the regions of the cover 20a that are adjacent the regions at which the heat sealing layer 80 is thermally bonded to a container (not shown in Fig. 8).

**Additional Preferred Aspects of the Cover and Container Assembly**

Table 5 set forth below, lists additional preferred characteristics and features of the preferred package assembly. The characteristics and features are listed in order of importance. Items 1, 2, 6, and 11 are preferably achieved by appropriate selection of the materials used in the respective layer(s). Items 3, 4, 7, 8, 9, and 11 are preferably achieved by appropriate selection of the pressure sensitive adhesive and its characteristics and properties.

Table 5 - Features of Preferred Package Assembly

| Item | Characteristic or Feature |
|---|---|
| 1 | Barrier Properties |
| 2 | Good permanent seal to package bottom |
| 3 | Indirect Food Contact (regarding adhesive) |
| 4 | Release from "reseal film" |
| 5 | Tamper Evidence/Security |
| 6 | Overprinting Quantity (letter press, dot matrix, flexo) |
| 7 | Peel after delam/relam |
| 8 | Application Temp (5 deg C-10 deg C) |
| 9 | Service Temp (-5 to 30 deg C) |
| 10 | Printing Speed |
| 11 | Laminate Clarity |
| 12 | Direct Food Contact (regarding adhesive) |

The present invention also provides a method for opening and resealing a previously thermally sealed package. The package comprises a container component and a cover component, as previously described herein. The method comprises separating a first portion of the cover component from a remaining second portion of the cover component and container component thermally adhered thereto. This results in separation of the pressure sensitive adhesive layer from the release layer in the heat sealed region(s) to thereby expose a region of the pressure sensitive adhesive and a corresponding region of the release layer. As cover separation does not occur elsewhere, such as in the interior region 23 of the cover 20 (see Figure 4), the package is readily opened and the interior of the container becomes accessible. The method also comprises matingly contacting the exposed region of pressure sensitive adhesive to the exposed region of the release layer, to thereby reseal the package. The term "matingly contacting" refers to positioning the cover outer separable portion 22 having the exposed region of pressure sensitive adhesive, such that this region is aligned with the corresponding exposed region of release layer in the cover inner separable portion 24. Preferably, upon matingly contacting these regions to another, the entirety of each region is contacted with the other, or very nearly so.

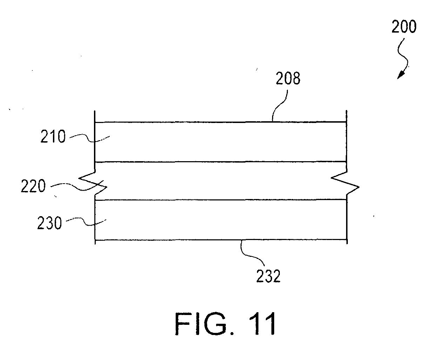

Figure 11 is a schematic cross sectional view of a laminate or portion of a laminate in which two layers, disposed on opposite faces of an adhesive layer have particular thermal expansion characteristics relative to one another. Specifically, Figure 11 depicts a laminate 200 comprising a first polymeric film or layer 210, an adhesive layer 220, and a second polymeric film or layer 230. The first polymeric layer 210 defines an outer face 208. The second polymeric layer 230 defines an outer face 232. The thermal expansion characteristics of the layers 210 and 230 are such that the two dimensional vector delta CTE (or CTS) value or "Q" value as noted herein, is less than 1,000 $\mu$m/m °C, preferably less than 500 $\mu$m/m °C, and most preferably less than 100 $\mu$m/m °C. Also, as previously explained, the laminate 200 preferably exhibits a T-peel force of from about 0.079 N/cm to about 2.756 N/cm, and more preferably within a range of from about 0.709 N/cm to about 1.102 N/cm. Determination of T-peel forces is performed as described herein.

The container component and the cover component are thermally adhered to one another by contacting a first sealing layer of the container component to the second sealing layer of the cover component. the method also includes heating the first and second sealing layers to a temperature of from about 120°C to about 130°C for a time period of at least 2 seconds.

**Examples**

Example 1 - In a first series of investigations, peel tests were conducted in which the adhesive force of a preferred pressure sensitive adhesive, the previously noted Fasson® S692N, was measured relative to different substrates. Four different substrates were evaluated, glass, high density polyethylene (HDPE), polyethylene terephthalate (PET), and polypropylene (PP). The adhesive was applied to the respective substrates, at varying adhesive coat weights. The peel strength of the adhesive from the substrate was then measured. Figure 9 illustrates peel strength values (in N/cm) measured for each of the substrates containing varying amounts of the preferred adhesive (in gsm). As will be appreciated as the coating weight increased, the peel strength increased.

Example 2 - In another series of investigations, loop tack of the preferred adhesive Fasson® 5692N was measured in regard to the previously noted four substrates, glass, HDPE, PET and PP. Figure 10 illustrates loop tack values (in N/cm) measured for each of the substrates containing varying amounts of the adhesive (in gsm). As the coating weight increased, the loop tack increased.

As previously explained, differences in peel strength and loop tack between opposing faces of the pressure sensitive adhesive in the cover laminates can be utilized to achieve desired behavior of the cover upon separation and resealing characteristics. Figures 9 and 10 reveal that coating weight or thickness of the pressure sensitive adhesive in the cover laminate can also affect the peel strength and loop tack characteristics between the adhesive and each of the layers disposed immediately adjacent to the adhesive layer.

Additional details as to various components, manufacturing aspects, and construction of the preferred embodiment package assembly, and its cover laminate and container components are provided in US Patent 7,165,888, owned by the assignee of the present application.

Many other benefits will no doubt become apparent from future application and development of this technology.

All patents, published applications, test methods or standards, and articles noted herein are hereby incorporated by reference in their entirety.

As described hereinabove, the present invention solves many problems associated with previous type devices. However, it will be appreciated that various changes in the details, materials and arrangements of parts, which have been herein described and illustrated in order to explain the nature of the invention, may be made by those skilled in the art without departing from the principle and scope of the invention, as expressed in the appended claims.

**Claims**

1.  A resealable package assembly comprising a container (100) and a cover (20), the container (100) and the cover (20) adopted to sealingly engage one another,
    the container (100) including

    a polymeric substrate (120) defining a sealing face (112), and
    a first sealing layer (110) disposed on the sealing face (112) of the polymeric substrate (120);

    wherein the cover (20) defines an outer face (32) and an inner face (82), the inner face (82) directed towards the sealing face (112) of the polymeric substrate (120) upon sealingly engaging the container (100) and the cover (20) to one another, the cover (20) including

    an outer substrate (30) providing the outer face (32) of the cover,
    an inner substrate (70),
    an adhesive layer (50) disposed between the outer substrate (30) and the inner substrate (70),
    a second sealing layer (80) disposed on the inner substrate (70), the second sealing layer (80) providing the inner face (82) of the cover (20),
    a release layer (60) disposed between the inner substrate (70) and the adhesive layer (50), and immediately adjacent to the adhesive layer (50);
    a barrier layer (40) disposed (i) between the inner substrate (70) and the outer substrate (30), or (ii) on the second sealing layer (80) of the inner substrate (70);
    wherein the barrier layer (40) exhibits an oxygen permeability of less than 50 cc/m$^2$/24 hours;
    wherein the outer substrate (30) of the cover (20) and the inner substrate (70) of the cover (70) exhibit a two dimensional vector delta CTE (or CTS) value Q of less than 1,000 $\mu$m/m °C at 155 °C or less;

wherein a cut, score, or slit (90) is provided in at least the second sealing layer (80); and

wherein the opening force of the cover is less than 5.906 N/cm.

2. The resealable package assembly of claim 1, wherein the adhesive is a pressure sensitive adhesive.

3. The resealable package assembly of claim 1 or 2, wherein at least one of the first sealing layer (110) and the second sealing layer (80) comprises a material selected from the group consisting of linear low density polyethylene (LLDPE), polyolefin co-polymer and glycol-modified polyethylene terephthalate (PETG), and combinations thereof.

4. The resealable package assembly of any one of claims 1 to 3, wherein the inner substrate (70) comprises a material selected from the group consisting of oriented polypropylene (OPP), polyethylene terephthalate (PET), polyvinyl chloride (PVC), ortho-phthalaldehyde (OPA), and combinations thereof.

5. The resealable package assembly of claim 2, wherein the pressure sensitive adhesive layer (50) comprises a polymeric blend of butyl acrylate and 2-ethylhexyl acrylate monomers.

6. The resealable package assembly of claim 1, including the release layer (60), wherein the release layer (60) comprises silicone.

7. The resealable package assembly of any one of claims 1 to 6, wherein the outer substrate (30) comprises a material selected from the group consisting of polyethylene terephthalate (PET), polyethylene (PE), polypropylene (PP), polyvinyl chloride (PVC), ortho-phthalaldehyde (OPA), copolymers thereof, and combinations thereof.

8. The resealable package assembly of claim 7, wherein the barrier layer (40) is disposed between the adhesive layer (50) and the outer substrate (30).

9. The resealable package assembly of claim 8, wherein the barrier layer (40) exhibits an oxygen permeability of 0.5 to 7cc/m$^2$/24 hours.

10. The resealable package assembly of claim 8 or 9, wherein the barrier layer (40) comprises a material selected from the group consisting of polyvinylidene chloride (PVDC), ethylene vinyl alcohol polymer (EVOH), polyvinyl alcohol (PVOH), nylon polymers, and combinations thereof.

11. The resealable package assembly of any one of claims 1 to 10, wherein the opening force of the cover is from 0.039 N/cm to less than 5.906 N/cm, more preferably from 0.787 N/cm to 3.937 N/cm.

12. The resealable package assembly of any one of claims 1 to 11, wherein the cover (20) is sealingly engaged to the container (100).

13. The resealable package assembly of any one of claims 1 to 12, wherein the first sealing layer (110) of the container (100) is thermally adhered to the second sealing layer (80) of the cover (20).

14. The resealable package assembly of claim 11, wherein a portion (22) of the cover (20) is removed from the container (100) by separating the adhesive layer (50) of the cover (20) from the release layer (60) of the cover (20).

15. The resealable package assembly of any one of claims 1 to 14, further comprising:

a printing layer (36) disposed on the outer substrate (30) or below the outer substrate (30), wherein the printing layer (36) provides the outer face (32) of the cover (20).

16. A method for opening and resealing a previously sealed package according to any one of claims 1 to 15, having the steps of:

providing a package having a container component (100) and a cover component (20), wherein the container component (100) includes a polymeric substrate (120) defining a sealing face (112), and a first sealing layer (110) disposed on the sealing face (112) of the container substrate (120); wherein the cover component (20) defines an outer face (32) and an inner face (82), the inner face (82) directed towards the sealing face (112) of the container substrate (120), the cover component (20) including an outer substrate (30) providing the outer face (32) of the cover component (20), an inner substrate (70), an adhesive layer (50) disposed between the outer substrate (30) and the inner substrate (70), a second sealing layer (80) disposed on the inner substrate (70), the second sealing layer (80) providing the inner face (82) of the cover component (20) and having a cut, score, or slit (90) formed therein, and a release layer (60) disposed between the inner substrate (70) and the adhesive layer (50) and contacting the adhesive layer (50), the container component (100) and the cover component (20) being thermally adhered to one another along the first and second sealing faces (112, 82), and a barrier layer (40) disposed (i) between the inner substrate (70) and the outer substrate (30), or (ii) on the second sealing layer (80) of the inner substrate (70); wherein the barrier layer (40) exhibits an oxygen permeability of less than 50 cc/m$^2$/24 hours; wherein the opening force of the cover component (20) is less than 5.906 N/cm; and wherein the outer substrate (30) of the cover component (20) and the inner substrate (70) of the cover component (20) exhibit a two dimensional vector delta CTE (or CTS) value Q of less than 1,000 $\mu$m/m °C at 155 °C or less;

disengaging a first portion (22) of the cover component (20) from a remaining second portion (24) of the cover component (20) and container component (100) thermally adhered thereto, by separating the adhesive layer (50) from the release layer (60) to thereby open the package; and

matingly contacting the adhesive layer (50) to the release layer (60), to thereby reseal the package.

17. The method of claim 16, wherein Q is less than 500 $\mu$m/m °C.

18. The method of claim 17, wherein Q is less than 100 $\mu$m/m °C.

19. The method of any one of claims 16 to 18, wherein the laminate exhibits a T-peel force of from about 0.079 N/cm to about 2.756 N/cm.

20. The method of any one of claims 16 to 18, wherein the laminate exhibits a T-peel force of from about 0.787 N/cm to about 1.575 N/cm.

21. The method of claim 16, wherein the adhesive is a pressure sensitive adhesive.

22. The method of any one of claims 16 to 21, wherein the container component (100) and the cover component (20) are thermally adhered to one another by contacting the first sealing layer (120) of the container component (100) to the second sealing layer (80) of the cover component (20); and

heating the first and second sealing layers (120, 80) to a temperature of from about 80 °C to about 155 °C for a time period of at least 1 second.

23. The method of any one of claims 16 to 22, wherein the opening force of the cover component (20) is preferably from 0.039 N/cm to less than 5.906 N/cm, more preferably from 0.787 N/cm to 3.937 N/cm.

**Patentansprüche**

1. Wiederverschließbare Verpackungseinheit, umfassend einen Behälter (100) und eine Abdeckung (20), wobei der Behälter (100) und die Abdeckung (20) eingerichtet sind, miteinander verschließend in Eingriff gebracht zu werden, wobei der Behälter (100) einschließt

ein Polymersubstrat (120), welches eine Versiegelungsfläche (112) definiert, und

eine erste Versiegelungsschicht (110), angeordnet auf der Versiegelungsfläche (112) des Polymersubstrats (120), wobei die Abdeckung (20) eine äußere Fläche (32) und eine innere Fläche (82) definiert, wobei nach verschließendem Ineingriffbringen des Behälters (100) und der Abdeckung (20) miteinander die innere Fläche (82) zu der Versiegelungsfläche (112) des Polymersubstrats (120) gerichtet ist, wobei die Abdeckung (20) einschließt

ein äußeres Substrat (30), bereitstellend die äußere Fläche (32) der Abdeckung,

ein inneres Substrat (70),

eine Haftmittelschicht (50), angeordnet zwischen dem äußeren Substrat (30) und dem inneren Substrat (70),

eine zweite Versiegelungsschicht (80), angeordnet auf dem inneren Substrat (70), wobei die zweite Versiegelungsschicht (80) die innere Fläche (82) der Abdeckung (20) bereitstellt,

eine Trennschicht (60), angeordnet zwischen dem inneren Substrat (70) und der Haftmittelschicht (50) und unmittelbar angrenzend an die Haftmittelschicht (50),

eine Sperrschicht (40), angeordnet (i) zwischen dem inneren Substrat (70) und dem äußeren Substrat (30), oder (ii) auf der zweiten Versiegelungsschicht (80) des inneren Substrats (70),

wobei die Sperrschicht (40) eine Sauerstoffdurchlässigkeit von weniger als 50 cc/m$^2$/24 Stunden zeigt,
wobei das äußere Substrat (30) der Abdeckung (20) und das innere Substrat (70) der Abdeckung (70) einen zweidimensionalen Vektor Delta CTE (oder CTS) Wert Q von weniger als 1000 µm/m °C bei 155°C oder weniger zeigt,
wobei ein Schnitt, eine Kerbe oder ein Schlitz (90) in mindestens der zweiten Versiegelungsschicht (80) vorgesehen ist, und
wobei die Öffnungskraft der Abdeckung weniger als 5,906 N/cm beträgt.

2. Wiederverschließbare Verpackungseinheit gemäß Anspruch 1, wobei das Haftmittel ein Haftkleber ist.

3. Wiederverschließbare Verpackungseinheit gemäß Anspruch 1 oder 2, wobei mindestens eine der ersten Versiegelungsschicht (110) und der zweiten Versiegelungsschicht (80) ein Material umfaßt, ausgewählt aus der Gruppe, bestehend aus linearem Polyethylen niederer Dichte (LLDPE), Polyolefin-Co-Copolymer und Glycol-modifiziertem Polyethylenterephthalat (PETG) und Kombinationen davon.

4. Wiederverschließbare Verpackungseinheit gemäß einem der Ansprüche 1 bis 3, wobei das innere Substrat (70) ein Material umfaßt, ausgewählt aus der Gruppe, bestehend aus gestrecktem Polypropylen (OPP), Polyethylenterephthalat (PET), Polyvinylchlorid (PVC), ortho-Phthalaldehyd (OPA) und Kombinationen davon.

5. Wiederverschließbare Verpackungseinheit gemäß Anspruch 2, wobei die Haftkleberschicht (50) ein Polymerblend von Butylacrylat- und 2-Ethylhexylacrylat-Monomeren umfaßt.

6. Wiederverschließbare Verpackungseinheit gemäß Anspruch 1, welche die Trennschicht (60) einschließt, wobei die Trennschicht (60) Silikon umfaßt.

7. Wiederverschließbare Verpackungseinheit gemäß einem der Ansprüche 1 bis 6, wobei das äußere Substrat (30) ein Material umfaßt, ausgewählt aus der Gruppe, bestehend aus Polyethylenterephthalat (PET), Polyethylen (PE), Polypropylen (PP), Polyvinylchlorid (PVC), ortho-Phthalaldehyd (OPA), Copolymeren davon und Kombinationen davon.

8. Wiederverschließbare Verpackungseinheit gemäß Anspruch 7, wobei die Sperrschicht (40) zwischen der Haftmittelschicht (50) und dem äußeren Substrat (30) angeordnet ist.

9. Wiederverschließbare Verpackungseinheit gemäß Anspruch 8, wobei die Sperrschicht (40) eine Sauerstoffdurchlässigkeit von 0,5 bis 7cc/m$^2$/24 Stunden zeigt.

10. Wiederverschließbare Verpackungseinheit gemäß Anspruch 8 oder 9, wobei die Sperrschicht (40) ein Material umfaßt, ausgewählt aus der Gruppe, bestehend aus Polyvinylidenchlorid (PVDC), Ethylenvinylalkohol-Polymer (EVOH), Polyvinylalkohol (PVOH), Nylonpolymeren und Kombinationen davon.

11. Wiederverschließbare Verpackungseinheit gemäß einem der Ansprüche 1 bis 10, wobei die Öffnungskraft der Abdeckung von 0,039 N/cm bis weniger als 5,906 N/cm, mehr bevorzugt von 0,787 N/cm bis 3,937 N/cm, beträgt.

12. Wiederverschließbare Verpackungseinheit gemäß einem der Ansprüche 1 bis 11, wobei die Abdeckung (20) verschließend mit dem Behälter (100) in Eingriff gebracht ist.

13. Wiederverschließbare Verpackungseinheit gemäß einem der Ansprüche 1 bis 12, wobei die erste Versiegelungsschicht (110) des Behälters (100) thermisch an die zweite Versiegelungsschicht (80) der Abdeckung (20) gebunden ist.

14. Wiederverschließbare Verpackungseinheit gemäß Anspruch 11, wobei ein Abschnitt (22) der Abdeckung (20) von dem Behälter (100) durch Abtrennen der Haftmittelschicht (50) der Abdeckung (20) von der Trennschicht (60) der Abdeckung (20) entfernt wird.

15. Wiederverschließbare Verpackungseinheit gemäß einem der Ansprüche 1 bis 14, weiter umfassend:

eine Druckschicht (36), angeordnet auf dem äußere Substrat (30) oder unterhalb des äußeren Substrats (30), wobei die Druckschicht (36) die äußere Fläche (32) der Abdeckung (20) bereitstellt.

**16.** Verfahren zum Öffnen und Verschließen bzw. Versiegeln einer zuvor verschlossenen Verpackung gemäß einem der Ansprüche 1 bis 15, welches die Schritte aufweist:

das Bereitstellen einer Verpackung mit einer Behälterkomponente (100) und einer Abdeckungskomponente (20), wobei die Behälterkomponente (100) ein Polymersubstrat (120), welches eine Versiegelungsfläche (112) definiert, und eine erste Versiegelungsschicht (110), angeordnet auf der Versiegelungsfläche (112) des Behältersubstrats (120) einschließt, wobei die Abdeckungskomponente (20) eine äußere Fläche (32) und eine innere Fläche (82) definiert, wobei die innere Fläche (82) zu der Versiegelungsfläche (112) des Behältersubstrats (120) gerichtet ist, wobei die Abdeckungskomponente (20) ein äußeres Substrat (30), welches die äußere Fläche (32) der Abdeckungskomponente (20) definiert, ein inneres Substrat (70), eine Haftmittelschicht (50), angeordnet zwischen dem äußeren Substrat (30) und dem inneren Substrat (70), eine zweite Versiegelungsschicht (80), angeordnet auf dem inneren Substrat (70), wobei die zweite Versiegelungsschicht (80) die innere Fläche (82) der Abdeckungskomponente (20) bereitstellt und einen Schnitt, eine Kerbe oder einen Schlitz (90) darin gebildet aufweist, und eine Trennschicht (60), angeordnet zwischen dem inneren Substrat (70) und der Haftmittelschicht (50) und die Haftmittelschicht (50) kontaktierend, wobei die Behälterkomponente (100) und die Abdeckungskomponente (20) thermisch aneinander entlang der ersten und zweiten Versiegelungsfläche (112, 82) gebunden sind, und eine Sperrschicht (40), angeordnet (i) zwischen dem inneren Substrat (70) und dem äußeren Substrat (30) oder (ii) auf der zweiten Versiegelungsschicht (80) des inneren Substrats (70), einschließt, wobei die Sperrschicht (40) eine Sauerstoffdurchlässigkeit von weniger als 50 cc/m$^2$/24 Stunden zeigt, wobei die Öffnungskraft der Abdeckungskomponente (20) weniger als 5,906 N/cm beträgt, und wobei das äußere Substrat (30) der Abdeckungskomponente (20) und das innere Substrat (70) der Abdeckungskomponente (20) einen zweidimensionalen Vektor Delta CTE (oder CTS) Wert Q von weniger als 1000 $\mu$m/m °C bei 155°C oder weniger zeigt,

das Entkoppeln eines ersten Abschnitts (22) der Abdeckungskomponente (20) von einem verbleibenden zweiten Abschnitt (24) der Abdeckungskomponente (20) und der thermisch daran gebundenen Behälterkomponente (100) durch Abtrennen der Haftmittelschicht (50) von der Trennschicht (60), um dadurch die Verpackung zu öffnen, und

zusammenpassendes Kontaktieren der Haftmittelschicht (50) an die Trennschicht (60), um dadurch die Verpackung wieder zu verschließen.

**17.** Verfahren gemäß Anspruch 16, wobei Q weniger als 500 $\mu$m/m °C ist.

**18.** Verfahren gemäß Anspruch 17, wobei Q weniger als 100 $\mu$m/m °C ist.

**19.** Verfahren gemäß einem der Ansprüche 16 bis 18, wobei das Laminat eine T-Schälkraft von etwa 0,079 N/cm bis etwa 2,756 N/cm zeigt.

**20.** Verfahren gemäß einem der Ansprüche 16 bis 18, wobei das Laminat eine T-Schälkraft von etwa 0,787 N/cm bis etwa 1,575 N/cm.

**21.** Verfahren gemäß Anspruch 16, wobei das Haftmittel ein Haftkleber ist.

**22.** Verfahren gemäß einem der Ansprüche 16 bis 21, wobei die Behälterkomponente (100) und die Abdeckungskomponente (20) durch Inkontaktbringen der ersten Versiegelungsschicht (120) der Behälterkomponente (100) an die zweite Versiegelungsschicht (80) der Abdeckungskomponente (20) thermisch aneinander gebunden sind, und Erwärmen der ersten und zweiten Versiegelungsschicht (120, 80) auf eine Temperatur von etwa 80°C bis etwa 155°C für eine Zeitdauer von mindestens 1 Sekunde.

**23.** Verfahren gemäß einem der Ansprüche 16 bis 22, wobei die Öffnungskraft der Abdeckungskomponente (20) vorzugsweise von 0,039 N/cm bis weniger als 5,906 N/cm, mehr bevorzugt von 0,787 N/cm bis 3,937 N/cm, beträgt.

**Revendications**

**1.** Ensemble d'emballage refermable hermétiquement comprenant un récipient (100) et un couvercle (20), le récipient (100) et le couvercle (20) étant adaptés pour s'engager de manière étanche l'un avec l'autre, le récipient (100) comprenant :

un substrat polymère (120) définissant une face d'étanchéité (112) et

une première couche d'étanchéité (110) disposée sur la face d'étanchéité (112) du substrat polymère (120) ;

dans lequel le couvercle (20) définit une face externe (32) et une face interne (82), la face interne (82) étant dirigée vers la face d'étanchéité (112) du substrat polymère (120) lors de l'engagement étanche du récipient (100) et du couvercle (20) l'un avec l'autre, le couvercle (20) comprenant :

un substrat externe (30) fournissant la face externe (32) du couvercle,

un substrat interne (70),

une couche adhésive (50) disposée entre le substrat externe (30) et le substrat interne (70),

une seconde couche d'étanchéité (80) disposée sur le substrat interne (70), la seconde couche d'étanchéité (80) fournissant la face interne (82) du couvercle (20),

une couche antiadhésive (60) disposée entre le substrat interne (70) et la couche adhésive (50) et immédiatement adjacente à la couche adhésive (50) ;

une couche barrière (40) disposée (i) entre le substrat interne (70) et le substrat externe (30) ou (ii) sur la seconde couche d'étanchéité (80) du substrat interne (70) ;

dans lequel la couche barrière (40) présente une perméabilité à l'oxygène de moins de 50 cm$^3$/m$^2$/24 heures ;

dans lequel le substrat externe (30) du couvercle (20) et le substrat interne (70) du couvercle (70) présentent une valeur Q du vecteur delta CTE (ou CTS) bidimensionnel de moins de 1000 $\mu$m/m °C à 155 °C ou moins ;

dans lequel une découpe, une entaille ou une incision (90) est ménagée dans au moins la seconde couche d'étanchéité (80) ; et

dans lequel la force d'ouverture du couvercle est inférieure à 5,906 N/cm.

2. Ensemble d'emballage refermable hermétiquement selon la revendication 1, dans lequel l'adhésif est un adhésif sensible à la pression.

3. Ensemble d'emballage refermable hermétiquement selon la revendication 1 ou 2, dans lequel au moins l'une parmi la première couche d'étanchéité (110) et la seconde couche d'étanchéité (80) comprend un matériau choisi dans le groupe constitué d'un polyéthylène linéaire de faible densité (LLDPE), d'un copolymère de polyoléfine et du poly(téréphtalate d'éthylène) modifié par du glycol (PETG) et de leurs combinaisons.

4. Ensemble d'emballage refermable hermétiquement selon l'une quelconque des revendications 1 à 3, dans lequel le substrat interne (70) comprend un matériau choisi dans le groupe constitué par le polypropylène orienté (OPP), le poly(téréphtalate d'éthylène) (PET), le poly(chlorure de vinyle) (PVC), l'orthophtalaldéhyde (OPA) et leurs combinaisons.

5. Ensemble d'emballage refermable hermétiquement selon la revendication 2, dans lequel la couche adhésive sensible à la pression (50) comprend un mélange polymère de monomères d'acrylate de butyle et d'acrylate de 2-éthylhexyle.

6. Ensemble d'emballage refermable hermétiquement selon la revendication 1, comprenant la couche antiadhésive (60), dans lequel la couche antiadhésive (60) comprend du silicone.

7. Ensemble d'emballage refermable hermétiquement selon l'une quelconque des revendications 1 à 6, dans lequel le substrat externe (30) comprend un matériau choisi dans le groupe constitué du poly(téréphtalate d'éthylène) (PET), du polyéthylène (PE), du polypropylène (PP), du poly(chlorure de vinyle) (PVC), de l'ortho-phtalaldéhyde (OPA), de leurs copolymères et de leurs combinaisons.

8. Ensemble d'emballage refermable hermétiquement selon la revendication 7, dans lequel la couche barrière (40) est disposée entre la couche adhésive (50) et le substrat externe (30).

9. Ensemble d'emballage refermable hermétiquement selon la revendication 8, dans lequel la couche barrière (40) présente une perméabilité à l'oxygène de 0.5 à 7 cm$^3$/m$^2$/24 heures.

10. Ensemble d'emballage refermable hermétiquement selon la revendication 8 ou 9, dans lequel la couche barrière (40) comprend un matériau choisi dans le groupe constitué du poly(chlorure de vinylydène) (PVDC), d'un polymère d'éthylène et d'alcool vinylique (EVOH), de l'alcool polyvinylique (PVOH), de polymères de nylon et de leurs combinaisons.

**11.** Ensemble d'emballage refermable hermétiquement selon l'une quelconque des revendications 1 à 10, dans lequel la force d'ouverture du couvercle est de 0,039 N/cm à moins de 5,906 N/cm, de manière davantage préférée de 0,787 N/cm à 3,937 N/cm.

**12.** Ensemble d'emballage refermable hermétiquement selon l'une quelconque des revendications 1 à 11, dans lequel le couvercle (20) est engagé de manière étanche avec le récipient (100).

**13.** Ensemble d'emballage refermable hermétiquement selon l'une quelconque des revendications 1 à 12, dans lequel la première couche d'étanchéité (110) du récipient (100) est collée à chaud à la seconde couche d'étanchéité (80) du couvercle (20).

**14.** Ensemble d'emballage refermable hermétiquement selon la revendication 11, dans lequel une partie (22) du couvercle (20) est retirée du couvercle (100) en séparant la couche adhésive (50) du couvercle (20) de la couche antiadhésive (60) du couvercle (20).

**15.** Ensemble d'emballage refermable hermétiquement selon l'une quelconque des revendications 1 à 14, comprenant en outre :

une couche d'impression (36) disposée sur le substrat externe (30) ou en dessous du substrat externe (30), dans lequel la couche d'impression (36) fournit la face externe (32) du couvercle (20).

**16.** Procédé d'ouverture et de refermeture hermétique d'un emballage précédemment étanché selon l'une quelconque des revendications 1 à 15, présentant les étapes consistant à :

fournir un emballage ayant un composant récipient (100) et un composant couvercle (20), dans lequel le composant récipient (100) comprend un substrat polymère (120) définissant un face d'étanchéité (112) et une première couche d'étanchéité (110) disposée sur la face d'étanchéité (112) du substrat de récipient (120) ; dans lequel le composant couvercle (20) définit une face externe (32) et une face interne (82), la face interne (82) étant dirigée vers la face d'étanchéité (112) du substrat de récipient (120), le composant couvercle (20) comprenant un substrat externe (30) fournissant la face externe (32) du composant couvercle (20), un substrat interne (70), une couche adhésive (50) disposée entre le substrat externe (30) et le substrat interne (70), une seconde couche d'étanchéité (80) disposée sur le substrat interne (70), la seconde couche d'étanchéité (80) fournissant la face interne (82) du composant couvercle (20) et ayant une découpe, une entaille ou une incision (90) qui y est formée, et une couche antiadhésive (60) disposée entre le substrat interne (70) et la couche adhésive (50) et venant en contact avec la couche adhésive (50), le composant récipient (100) et le composant couvercle (20) étant collés à chaud l'un à l'autre le long des première et seconde faces d'étanchéité (112, 82), et une couche barrière (40) disposée (i) entre le substrat interne (70) et le substrat externe (30) ou (ii) sur la seconde couche d'étanchéité (80) du substrat interne (70) ; dans lequel la couche barrière (40) présente une perméabilité à l'oxygène de moins de 50 cm$^3$/m$^2$/24 heures ; dans lequel la force d'ouverture du composant couvercle (20) est inférieure à 5,906 N/cm ; et dans lequel le substrat externe (30) du composant couvercle (20) et le substrat interne (70) du composant couvercle (20) présentent une valeur Q du vecteur delta CTE (ou CTS) bidimensionnel de moins de 1000 $\mu$m/m °C à 155 °C ou moins ;

dégager une première partie (22) du composant couvercle (20) d'une seconde partie restante (24) du composant couvercle (20) et du composant récipient (100) qui est collé à chaud à celui-ci, en séparant la couche adhésive (50) de la couche antiadhésive (60) pour ainsi ouvrir l'emballage ; et

mettre en contact de manière appariée la couche adhésive (50) et la couche antiadhésive (60) pour ainsi refermer hermétiquement l'emballage.

**17.** Procédé selon la revendication 16, dans lequel Q est inférieure à 500 $\mu$m/m °C.

**18.** Procédé selon la revendication 17, dans lequel Q est inférieure à 100 $\mu$m/m °C.

**19.** Procédé selon l'une quelconque des revendications 16 à 18, dans lequel le stratifié présente une force d'arrachement T d'environ 0,079 N/cm à environ 2,756 N/cm.

**20.** Procédé selon l'une quelconque des revendications 16 à 18, dans lequel le stratifié présente une force d'arrachage T d'environ 0,787 N/cm à environ 1,575 N/cm.

**21.** Procédé selon la revendication 16, dans lequel l'adhésif est un adhésif sensible à la pression.

**22.** Procédé selon l'une quelconque des revendications 16 à 21, dans lequel le composant récipient (100) et le composant couvercle (20) sont collés à chaud l'un à l'autre en mettant en contact la première couche d'étanchéité (120) du composant récipient (100) avec la seconde couche d'étanchéité (80) du composant couvercle (20) ; et
en chauffant la première et la seconde couche d'étanchéité (120, 80) à une température d'environ 80 °C à environ 155 °C pendant une durée d'au moins 1 seconde.

**23.** Procédé selon l'une quelconque des revendications 16 à 22, dans lequel la force d'ouverture du composant couvercle (20) est de préférence de 0,039 N/cm à moins de 5,906 N/cm, de manière davantage préférée de 0,787 N/cm à 3,937 N/cm.

FIG. 1

FIG. 2

FIG. 3

FIG. 4

10

20

32

30
21
40
50
56
60
56
70
80
110
120

82

90

132

100

126

# FIG. 5

FIG. 6

FIG. 7

FIG. 8

20 MINS PEEL OF s692N

FIG. 9

LOOP TACK OF s692N

ZIPPY

PP

PET

HDPE

GLASS

COATING WEIGHT

LOOP TACK

24.80 23.00 21.70 20.70 19.70 17.30 16.30 13.60 11.70 10.90 6.87 5.97 3.20

7.874  5.906  3.937  1.969  0

**FIG. 10**

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3329331 A
- US 5062569 A
- US 3454210 A
- US 7422782 B
- US 6302290 B
- US 20040180118 A
- GB 2319746 A
- US 6056141 A
- EP 1016598 A1
- US 20040033379 A
- US 5623011 A
- US 5830571 A
- US 6147165 A
- US 5728469 A
- US 6486267 A
- US 20050074549 A
- US 7165888 B